# EUROPÄISCHE PATENTSCHRIFT

(11) **EP 1 524 243 B1**
(45) Veröffentlichungstag und Bekanntmachung des Hinweises auf die Patenterteilung: **19.09.2012**
(21) Anmeldenummer: 04105029.5
(22) Anmeldetag: 13.10.2004
(51) Int. Cl.: C03B 5/16, C03C 3/085, C03C 3/091, C03B 5/02, C03B 5/06, C03B 5/167, C03B 5/187, C03B 5/26, C03B 5/425, C03B 17/04

(54) **Vorrichtung und Verfahren zur Herstellung von hoch schmelzenden Gläsern oder Glaskeramiken sowie Glas oder Glaskeramik**
Apparatus and method for making high-melting glasses and glass ceramics as well as the glasses or glass ceramics
Dispositif et procédé de fabrication de verres et vitroceramiques à point de fusion élevé et les verres ou vitroceramiques

(30) Priorität: 14.10.2003 DE 10348466
(43) Veröffentlichungstag der Anmeldung: 20.04.2005
(73) Patentinhaber: Schott AG, 55122 Mainz (DE)
(72) Erfinder: Stelle, Thomas, 55118 Mainz (DE); Kirsch, Thomas, 55120 Mainz (DE); Kolberg, Uwe, Dr., 55130 Mainz (DE); Kissl, Paul, 55124 Mainz (DE); Peuchert, Ulrich, Dr., 55294 Bodenheim (DE)
(74) Vertreter: 2K Patentanwälte Blasberg Kewitz & Reichel

(56) Entgegenhaltungen:
- EP-A- 1 160 208
- DE-A- 19 939 781
- FR-A- 533 136
- GB-A- 1 222 248
- JP-A- 2 022 132
- US-A- 1 676 331
- US-A- 3 066 504
- US-A- 3 233 993
- US-A- 4 983 198
- PATENT ABSTRACTS OF JAPAN Bd. 0102, Nr. 58 (C-370), 4. September 1986 (1986-09-04) & JP 61 083632 A (KIYOSHI HAJIKANO), 28. April 1986 (1986-04-28)
- PATENT ABSTRACTS OF JAPAN Bd. 0122, Nr. 09 (C-504), 15. Juni 1988 (1988-06-15) & JP 63 008225 A (TOKAI DENKI KK), 14. Januar 1988 (1988-01-14)
- DATABASE WPI Section Ch, Week 198025 Derwent Publications Ltd., London, GB; Class L01, AN 1980-44682C XP002308373 & SU 695 979 A (AMBARTSUMYAN A G) 5. November 1979 (1979-11-05)

## Beschreibung

Die vorliegende Erfindung betrifft eine Vorrichtung und ein Verfahren zur Herstellung von hoch schmelzenden Gläsern oder Glaskeramiken. Genauer gesagt betrifft die vorliegende Erfindung eine Vorrichtung und ein Verfahren zur Herstellung von Formkörpern, beispielsweise von Stäben oder anderen Vollkörpern sowie von Rohren oder anderen Hohlkörpern, aus hoch schmelzenden Gläsern oder Glaskeramiken im diskontinuierlichen Betrieb. Ferner betrifft die vorliegende Erfindung ein hoch schmelzendes Glas oder eine hoch schmelzende Glaskeramik sowie daraus hergestellte Formkörper.

Allgemein betrifft die vorliegende Erfindung Gläser oder Glaskeramiken, die nur einen sehr geringen Anteil an Netzwerkwandlern, insbesondere Alkalioxide, aufweisen und Gläser oder Glaskeramiken, die einen hohen Anteil hoch schmelzender Oxide, wie beispielsweise SiO₂, Al₂O₃, ZrO₂, Nb₂O₅ oder Ta₂O₅, aufweisen. Gläser oder Glaskeramiken der vorgenannten Art weisen relativ hohe Schmelztemperaturen im Bereich von etwa 1700°C auf. Zu ihrer Herstellung muss eine Glasschmelze oftmals während längerer Zeiträume auf relativ hohe Temperaturen aufgeheizt werden, etwa zum Läutern der Glasschmelze. Die notwendigen relativ hohen Temperaturen im Dauerbetrieb stellen neue Herausforderungen an die Auslegung von Schmelztiegeln.

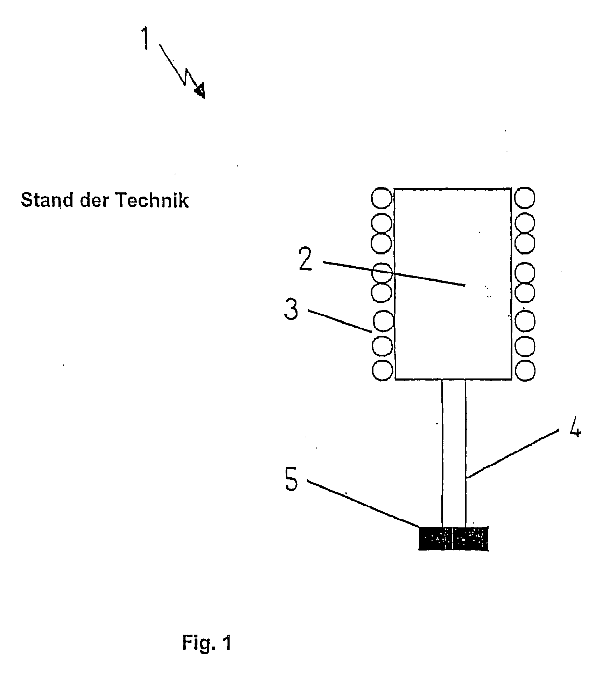

Die Fig. 1 zeigt eine Vorrichtung zur Herstellung von Rohren und Stäben im diskontinuierlichen Betrieb gemäß dem Stand der Technik. Die Vorrichtung umfasst einen als Schmelzgefäß dienenden Tiegel 2, der üblicherweise aus Pt und Pt-Legierungen, beispielsweise PtRh30, gebildet ist. Der Tiegel 2 weist eine zylindrische Gestalt auf und hat einen ebenfalls aus Edelmetall bestehenden Boden, in dem das Glasgemenge oder Glasscherben zunächst eingeschmolzen und dann bei um ca. 50-100°C höherer Temperatur geläutert wird. Zum Heizen des Tiegels 2 ist eine Heizvorrichtung 3 um den Tiegel 2 herum angeordnet. Meistens wirkt die Beheizung induktiv, sie kann aber auch als direkte oder indirekte Widerstandsbeheizung ausgebildet sein.

Der Tiegel 2 ist üblicherweise von einem Deckel (nicht dargestellt) abgeschlossen, der aus einem feuerfesten Material oder einem Edelmetall gebildet ist, um eine ausreichende Oberhitze zur Vermeidung großer Temperaturgradienten zu gewährleisten. Gegebenenfalls kann aber auch aktiv über Brenner oder elektrisch zugeheizt werden. Es versteht sich von selbst, dass die geschilderten Prozesse Einschmelzen und Läutern umso schneller und damit kostengünstiger ablaufen, je höher das gewählte Temperaturniveau ist. Zur Erzielung einer hohen Homogenität des geschmolzenen Glases kann die Glasschmelze mit Hilfe eines Edelmetallrührers, beispielsweise gefertigt aus den vorgenannten Pt-Legierungen oder aus Reinplatin, gerührt werden.

Wie in der Fig. 1 gezeigt ist, ist unter dem Tiegel 2 ein Rohr 4 aus einem der vorgenannten Edelmetalle angeschweißt, das über einen oder mehrere von der Tiegelheizung 2 unabhängige Heizkreise beheizt wird. Dies gewährleistet, dass die Temperatureinstellung des für den Heißformgebungsprozess entscheidenden Rohres 4 unabhängig von der Temperatureinstellung des Tiegels 2 realisiert werden kann

Die Vorrichtung gemäß der Fig. 1 wird üblicherweise nacheinander in den nachfolgend beschriebenen zwei Betriebszuständen betrieben. In einem ersten Betriebszustand wird zum Einschmelzen und Läutern der Glasschmelze das Rohr 4 zunächst relativ kalt gehalten, damit das gerade in dem Tiegel 2 geschmolzene Glas nicht gleich wieder aus dem Tiegel herausläuft. Glasschmelze, die in das Rohr 4 am Boden des Tiegels 2 hineinläuft, erstarrt oder verfestigt sich in dem Rohr 4 zu einem Pfropfen, der das Rohr 4 ausreichend verstopft, um ein Auslaufen der Glasschmelze zu verhindern. Nachdem in dem ersten Betriebszustand eine Glasschmelze mit der gewünschten Qualität in dem Tiegel 2 ausgebildet ist, wird die Temperatur in einem zweiten Betriebszustand im Tiegel 2 abgesenkt und im Rohr 4 erhöht, bis sich ein für die Heißformgebung günstiges Viskositätsprofil für die gesamte Anordnung ergibt. In dem zweiten Betriebszustand liegt dann die Temperatur im Tiegel 2 und im Rohr 4 zumeist in der Nähe des Verarbeitungspunktes (V_{A}) des herzustellenden Glases. Zum Formen von Formkörpern, beispielsweise von Stäben oder Rohren, fließt die Glasschmelze mit der gewünschten Viskosität, wie diese durch die Temperatur der Glasschmelze und der sie umgebenden Elemente vorgegeben wird, aus dem Rohr 4 heraus. Zur Formgebung der austretenden Glasschmelze zu dem herzustellenden Formkörper befindet sich am Ende des Rohres 4 oftmals eine als Heißformgebungseinrichtung dienende Düse, die auch gesondert zu dem Rohr 4 und dem Tiegel 2 beheizt werden kann und deren spezielle geometrische Ausgestaltung die Qualität des gefertigten Produktes beeinflussen kann. Zur Fertigung von Hohlkörpern, beispielsweise von Rohren, ist in die Düse üblicherweise eine Nadel geeigneten Durchmessers eingeschweißt.

Diese Anordnung hat sich in sehr vielen Fällen bewährt. Nachteilig ist jedoch, dass die maximale Temperatur auf etwa 1760°C beschränkt und die Lebensdauer der Vorrichtung bei derartig hohen Temperaturen stark eingeschränkt ist. Gläser oder Glaskeramiken, die nur einen sehr geringen Anteil an Netzwerkwandlern, speziell Alkalioxiden, aufweisen oder Gläser oder Glaskeramiken, die einen hohen Anteil hoch schmelzender Oxide wie beispielsweise Al₂O₃, SiO₂, ZrO₂, Nb₂O, oder Ta₂O₅ aufweisen, benötigen jedoch unter Umständen höhere Schmelztemperaturen beziehungsweise müssen bei den maximal möglichen Temperaturen über unwirtschaftlich lange Prozesszeiträume mehr zusammengesintert als geschmolzen werden.

EP 1 160 208 A2 offenbart einen Schmelztiegel zur kontinuierlichen Herstellung von Glas-Formkörpern. Der Schmelztiegel ist aus einem Metall gefertigt, das der Schmelztemperatur des Glases standhält, nämlich aus Molybdän oder Wolfram. Damit Oxide der Schmelztiegelwand nicht in die Glasschmelze hinein diffundieren, wo sie zu Verfärbungen des Glases und zu Einschlüssen in dem Glas führen können, ist die Schmelztiegelwand mit einer Schicht aus einem reaktionsträgen, erst bei hoher Temperatur schmelzenden Metall ausgekleidet. Die Auskleidung besteht aus Rhenium, Osmium, Iridium oder Legierungen dieser Metalle.

Der doppelwandige Aufbau des Schmelztiegels ist vergleichsweise aufwändig und erfordert einen relativ komplexen Aufbau, der den Aufbau einer wasserstoffhaltigen Schutzgasatmosphäre im Innen- und Außenraum des Schmelzgefäßes ermöglichen muss, um das Verbrennen von Molybdän oder Wolfram bei den verwendeten hohen Temperaturen zu unterdrücken. Dieses wasserstoffhaltige Gas bedingt jedoch verschiedene Probleme: Zum ersten ist es brennbar und setzt teure Sicherheitssysteme voraus, zum zweiten kann es zu Materialversprödungen bei Konstruktionswerkstoffen kommen und zum dritten, was für die Glasschmelze von großer Bedeutung ist, verhindert das wasserstoffhaltige Gas den Einsatz von Glasbestandteilen mit verschiedenen Oxidationsstufen und leicht reduzierbaren Komponenten. So sind insbesondere die in der Glaschemie üblichen Redoxläutermittel As₂O₃, Sb₂O₃ und SnO₂ nicht verwendbar, sondern es muss mit teurem Helium geläutert werden, was relativ ineffizient ist.

Zur Gemengezufuhr sind bei dieser Vorrichtung Schleusensysteme notwendig und es kann kein Ziehrohr mit Düse zur Formgebung verwendet werden, was für die Viskositätseinstellung des Glases für eine präzise Formgebung unumgänglich ist. Somit eignet sich diese Vorrichtung zwar für hochreines Kieselglas, bei dem ohnehin keine Läutermittel (= Verunreiniger) zugesetzt werden dürfen. Doch für eine kostengünstige und einfach zu handhabende Fertigung von Glasteilen hoher Präzision im diskontinuierlichen Betrieb ist diese Vorrichtung zumeist zu komplex und zu teuer.

Zur Herstellung hoch schmelzender, kristallisierender Gläser offenbart US 6 482 758 B1 die Verwendung eines Ir-Tiegels. Allerdings wird der Tiegel nach dem Läutern aus der Beheizungseinheit entnommen und ausgekippt. Es versteht sich von selbst, dass diese Vorgehensweise nur für relativ kleine Tiegel praktikabel ist, etwa für Experimente im Labormaßstab, weil große Tiegel aus Gewichtsgründen nicht einfach manuell entnommen werden können bzw. bei der zu Hilfenahme von Kränen unter dem Eigengewicht deformieren bzw. nicht bezahlbare Wandstärken aufweisen müssten. Weiter ist bei dieser Vorrichtung auch keine komplexe bzw. definierte Formgebung wie Rohrzug möglich, sondern nur der Guss in eine blockförmige Kompaktform. Ein weiterer Nachteil besteht gerade bei zur Kristallisation neigenden Gläsern darin, dass bei Guss über die Kante durch unkontrollierte Temperaturführung und/oder am oberen Rand sitzende Verdampfungsprodukte die unerwünschte Kristallisation ausgelöst werden kann.

Aus dem Stand der Technik sind auch Schmelztiegel aus Iridium oder einer hoch-iridiumhaltigen Legierung bekannt. Solche Schmelztiegel werden in der Kristallzucht verwendet, beispielsweise zur Kristallzucht nach dem bekannten Czochralski-Verfahren. Dabei werden ebenfalls Ausgangsmaterialien bei hohen Temperaturen aufgeschmolzen. Allerdings handelt es sich bei Kristallen um eine vollständig andere Substanzklasse mit ganz anderen Verarbeitungseigenschaften. So entfällt bei der Kristallzucht der bei Gläsern bekannte Läuterprozess und die Zugabe eines Läutermittels. Gänzlich anders ist auch die Formgebung, denn die Form eines gezogenen Kristalls wird durch den verwendeten Impfkristall und die Formgebung der zumeist sehr komplexen Ziehvorrichtung vorgegeben. Kristall-Ziehvorrichtungen können zur Herstellung von Gläsern deshalb nicht verwendet werden. Da Kristalle ein schlagartiges Erstarrungsverhalten bei definierter Temperatur zeigen, sind außerdem Heißformgebungsprozesse über ein Rohrsystem und über eine Temperaturabsenkung mit nachfolgender Viskositätserhöhung über viele hundert Grad prinzipiell nicht möglich.

US 4,938,198 offenbart eine Vorrichtung und ein Verfahren zur Herstellung stark reduzierender Phosphatgläser, mit einem Gefäß zum Aufnehmen einer Glasschmelze und mit einem Behälter, der das Gefäß aufnimmt, wobei das Gefäß einen rohrförmigen Auslass aufweist, das Gefäß und der rohrförmige Auslass aus sauerstoffdurchlässigem Platin oder einer sauerstoffdurchlässigen Platinlegierung gebildet sind, und wobei der Behälter ausgelegt ist, um das Gefäß und den rohrförmigen Auslass unter einer Sauerstoffatmosphäre aufzunehmen.

Dieser Druckschrift ist ferner der Hinweis zu entnehmen, dass das Gefäß zum Aufnehmen der Schmelze nicht aus Iridium oder einer Iridiumlegierung bestehen sollte, da Iridium nur unter einem vergleichsweise hohem Aufwand zu einem Gefäß verarbeitet werden kann und die Außenoberfläche des Gefäßes mit einem inerten Metall, beispielsweise Rhodium, beschichtet werden muss, was aufwändig ist.

JP 02-022132 A offenbart eine Vorrichtung zur Herstellung von Glasschmelzen im Temperaturbereich von 1000°C bis 2000°C. Offenbart wird ferner, dass Iridium prinzipiell als Hochtemperaturwerkstoff geeignet ist, um eine Korrosion, die durch die bei hohen Temperaturen vorliegende Schmelze hervorgerufen wird, mit dem Gefäß zum Aufnehmen der Glasschmelze zu unterbinden. Allerdings werden keine konkreten Maßnahmen zur Beheizung, zur Wahl des Feuerfestmaterials, zur Heißformgebung, zur verwendeten Glasart, zur Anlagensteuerung und zur Stabilisierung des Iridiums bzw. der Iridium-Legierung offenbart.

JP 61-A-083632 offenbart einen Schmelztiegel zum Schmelzen von Glas, der auf seiner Außenseite durch Spülen mit einem inerten Gas heruntergekühlt wird. Der Schmelztiegel besteht aus Molybdän, was die vorstehend im Zusammenhang mit der EP 1 160 208 A2 diskutierten Probleme bedingt.

JP 63-A-63008225 offenbart einen kontinuierlich oder chargenweise betreibbaren Schmelztiegel, bei dem sich ein rohrförmiger Auslass am Boden des Schmelztiegels durch eine den Schmelztiegel umgebende thermische Isolation hindurch erstreckt. Die Glasschmelze wird in dem Schmelztiegel mittels einer den Schmelztiegel umgebenden Heizeinrichtung aufgeheizt.

US 1,676,331 offenbart eine Glaszusammensetzung, die ähnlich ist zu derjenigen der hochschmelzenden Gläser oder Glaskeramiken gemäß der vorliegenden Erfindung. Allerdings können die sehr hohen Transmissionen im sichtbaren Wellenlängenbereich im Sinne der vorliegenden Erfindung nicht realisiert werden, da keine ausreichend hohen Temperaturen bei der Verarbeitung der Glasschmelze erzielt werden können.

Aufgabe der vorliegenden Erfindung ist es, ein Verfahren und eine Vorrichtung bereitzustellen, womit sich hoch schmelzende Gläser oder hoch schmelzende Glaskeramiken zuverlässig und mit geeigneter Qualität herstellen lassen. Ferner soll gemäß der vorliegenden Erfindung ein hoch schmelzendes Glas und eine hoch schmelzende Glaskeramik mit noch besseren Eigenschaften bereitgestellt werden.

Diese Aufgabe wird gelöst durch eine Vorrichtung zur Herstellung von hoch schmelzenden Gläsern oder Glaskeramiken nach Anspruch 1, durch ein Verfahren zur Herstellung von hoch schmelzenden Gläsern oder Glaskeramiken nach Anspruch 20 sowie durch ein hoch schmelzendes Glas oder eine hoch schmelzende Glaskeramik nach Anspruch 32. Weitere vorteilhafte Ausführungsformen sind Gegenstand der rückbezogenen Unteransprüche.

Unter hoch schmelzenden Gläsern oder hoch schmelzenden Glaskeramiken im Sinne dieser Anmeldung seien Gläser oder Glaskeramiken verstanden, die zur Herstellung einen Prozess durchlaufen, während dem die Temperaturen die üblicherweise durch das platinhaltige Material des Schmelztiegels vorgegebene Maximaltemperatur von 1760° C übersteigen. Dies schließt nicht aus, dass der Schmelzpunkt der Glasschmelze selbst unterhalb von 1760° C liegt. Wie nachfolgend noch ausführlicher beschrieben werden wird, lassen sich erfindungsgemäß jedoch Temperaturen von etwa 2000° C oder gar bis zu etwa 2200° C erzielen. Weil zum Schmelzen und Läutern der Glasschmelze erfindungsgemäß höhere Temperaturen erzielt werden können, lassen sich so hoch schmelzende Gläser oder Glaskeramiken mit überraschend vorteilhaften Eigenschaften erzielen, insbesondere hinsichtlich der optischen Transmission, des thermischen Ausdehnungsverhaltens und der Verwendung als Übergangsgläser zur Verbindung zweier Glassorten mit unterschiedlichen thermischen Ausdehnungskoeffizienten.

Die Erfinder haben herausgefunden, dass sich die vorgenannten relativ hohen Temperaturen ohne weiteres bei Verwendung von Iridium oder einem hoch-iridiumhaltigen Material erzielen lassen. Bekanntermaßen weist Iridium selbst einen Schmelzpunkt von etwa 2410° C bis etwa 2443° C auf. Auch hoch-iridiumhaltige Legierungen weisen einen nur geringfügig niedrigeren Schmelzpunkt auf. Wenngleich somit erfindungsgemäß Verarbeitungstemperaturen bis hin zu etwa 2400° C grundsätzlich denkbar sind, sollte erfindungsgemäß aus Sicherheitsgründen ein Temperaturabstand von etwa 100° C bis etwa 200° C zu dieser Obergrenze eingehalten werden, etwa zur Vermeidung einer lokalen Überhitzung, einer unzureichenden Temperaturmessung oder einer Stabilitätsverringerung aufgrund von Komgrenzenwachstum des Iridiums. Aufwändige Versuchsreihen der Erfinder haben ergeben, dass Iridium selbst bei den vorgenannten hohen Temperaturen nur relativ wenig mit der Glasschmelze reagiert.

Erfindungsgemäß lässt sich eine Oxidbildung des Iridiums bei hohen Temperaturen in Gegenwart von Sauerstoff in überraschend einfacher Weise dadurch verhindern, dass der Behälter derart ausgelegt ist, dass das Iridium oder hoch-iridiumhaltige Material der Vorrichtung, insbesondere des Gefäßes und des ersten Abschnittes des rohrförmigen Auslasses, unter einer Schutzgasatmosphäre aufgenommen wird. Vorteilhaft ist, dass sich so eine langzeitstabile Vorrichtung erzielen lässt.

Das Gefäß zur Aufnahme der Glasschmelze ist bevorzugt rohrförmig ausgebildet, wobei schlanke Grundformen ganz besonders bevorzugt werden, weil sich so vorteilhaft homogene Temperaturprofile im dem Gefäß erzielen lassen. Grundsätzlich eignen sich jedoch auch abgeplattete zylinderförmige Profile. Das Gefäß weist einen rohrförmigen Auslass aus, aus dem die Glasschmelze austritt. Bevorzugt befindet sich der rohrförmige Auslass in der Nähe des Bodens des Gefäßes und ist dieser bevorzugt im Boden angeordnet, ganz besonders bevorzugt in im Wesentlichen punktsymmetrischer Anordnung, so dass die Glasschmelze im Wesentlichen vollständig aus dem Gefäß auslaufen kann. Damit die Glasschmelze leichter und vollständiger auslaufen kann, kann der Boden des Gefäßes zum Auslass hin geneigt oder gewölbt sein. Bevorzugt gibt der rohrförmige Auslass des Gefäßes selbst das Profil des herzustellenden Formkörpers vor. Zu diesem Zweck kann der rohrförmige Auslass beispielsweise ein kreisrundes, Profil ausweisen. Der rohrförmige Auslass ist mit dem Gefäß verbunden, wobei der erste Abschnitt bevorzugt aus demselben Material wie das Gefäß selbst besteht.

Der Behälter nimmt das Gefäß und den ersten Abschnitt des rohrförmigen Auslasses auf. Zu diesem Zweck weist der Behälter bevorzugt geradwandige Seitenwände und einen Boden auf. Zweckmäßig ist das Gefäß mittig in dem Behälter angeordnet und ragt ein oberer Rand des Gefäßes selbst nicht über den oberen Rand des Behälters hinaus, so dass das Iridium oder hoch-iridiumhaltige Material des Gefäßes vollständig im Behälter aufgenommen werden kann.

Bevorzugt ist in dem Boden des Behälters eine Öffnung ausgebildet, durch die hindurch der rohrförmige Auslass in die Umgebungsatmosphäre ragt. Vorteilhaft ist, dass die Glasschmelze bei hohen Temperaturen aus dem Gefäß austreten und weiterverarbeitet werden kann, ohne dass das Gefäß aus dem Behälter heraus genommen werden muss, weil eine Oxidbildung des Iridiums oder des hoch-iridiumhaltigen Materials zuverlässig verhindert werden kann.

Bei dieser Ausführungsform weist der rohrförmige Auslass einen zweiten Abschnitt auf. Dabei können sowohl der erste Abschnitt als auch der zweite Abschnitt des rohrförmigen Auslasses selbst durchaus in eine Mehrzahl von Segmenten unterteilt sein. Erfindungsgemäß ist zumindest ein Segment des zweiten Abschnittes aus einer oxidationsbeständigen Legierung gebildet und einer Umgebungsatmosphäre ausgesetzt. Somit kann eine Oxidbildung des ersten Abschnittes des Auslassrohres zuverlässig verhindert werden. Der zweite Abschnitt kann im Vergleich zu dem ersten Abschnitt vergleichsweise kurz sein. Allerdings ist auf die Abhängigkeit der unterschiedliche spez. Widerstände der Materialien zu achten oder die Verwendung eines zweiten Heizkreises kann notwendig werden.

Zweckmäßig wirkt der rohrförmige Auslass selbst, beispielsweise der zweite, sich außerhalb des Behälters befindliche Abschnitt oder ein Segment davon, als Heißformgebungseinrichtung, um die aus dem rohrförmigen Auslass austretende Glasschmelze zu einem Formkörper auszubilden, beispielsweise zu einem runden Vollprofil. Selbstverständlich können auch hohle Formkörper mit den vorgenannten Profilen hergestellt werden, zu welchem Zweck eine Nadel mit geeignetem Profil in dem rohrförmigen Auslass, bevorzugt an dem Austrittsende desselben, angeordnet ist. Alternativ kann eine Heißformgebungseinrichtung auch an dem Austrittsende des rohrförmigen Auslasses angeordnet sein.

Erfindungsgemäß weist das Iridium einen Iridium-Anteil von mindestens etwa 99 %, bevorzugter von mindestens etwa 99,5 % und noch bevorzugter von mindestens etwa 99,8 % auf. Ganz besonders bevorzugt beträgt der Edelmetallanteil des Iridiums zumindest 99,95 %. Dem Iridium können weitere Elemente der Platingruppe beigemischt sein, bevorzugt mit Konzentrationen unterhalb von etwa 1000 ppm. Grundsätzlich eignet sich als hochiridiumhaltiges Material auch eine Platingruppe-Metalllegierung mit einem Iridium-Anteil von mindestens etwa 95 %, bevorzugter von mindestens etwa 96,5 % und noch bevorzugter von mindestens etwa 98 %. Es hat sich überraschenderweise herausgestellt, dass sich die vorgenannten Materialien ohne weiteres in Form von Blechen herstellen und zu dem Gefäß oder dem rohrförmigen Auslass mit der gewünschten Gestalt formen lassen. Selbst dünnwandige Profile weisen bei den vorgenanten relativ hohen Temperaturen noch eine ausreichende Formstabilität auf.

Besonders bevorzugt werden das Gefäß und der rohrförmige Auslass oder das zumindest eine Segment des ersten Abschnittes des rohrförmigen Auslasses aus einem vergleichsweise dünnen Blech gebildet, das geeignet verformt, beispielsweise gebogen oder gefalzt, wird. Anschließend werden die Seitenkanten des Bleches verschweißt. Zu diesem Zweck stehen geeignete Schweißverfahren bereit, ohne dass die Schweißkanten selbst zu einer weiteren Verunreinigung der Glasschmelze führen. Grundsätzlich können das Gefäß und der rohrförmige Auslass oder das zumindest eine Segment des ersten Abschnittes des rohrförmigen Auslasses natürlich auch aus mehr als einem Blech gebildet werden.

Bevorzugt besteht die oxidationsbeständige Legierung, die zur Bildung des der Umgebungsatmosphäre ausgesetzten zweiten Abschnittes des rohrförmigen Auslasses verwendet wird, aus einer Platingruppe-Metalllegierung, die etwa 30 Gewichtsprozent bis etwa 99 Gewichtsprozent Platin enthält und der ein Element aus der Platingruppe, also einer Gruppe bestehend aus Iridium (Ir), Osmium (Os), Palladium (Pd), Rhodium (Rh) und Ruthenium (Ru), beigemischt ist. Zweckmäßig ist die oxidationsbeständige Legierung eine PtRh30-Legierung, die kostengünstig zur Verfügung steht, sich in einfacher Weise bearbeiten und verschweißen lässt und das ausreichend formstabil und temperaturbeständig ist. Es hat sich gezeigt, dass der relativ geringe Rhodium-Anteil bei den erfindungsgemäß angedachten Verarbeitungstemperaturen, also bei den Temperaturen, bei denen die Glasschmelze erst aus dem rohrförmigen Auslass austritt und dabei mit dem Material des zweiten Abschnittes in Kontakt gelangt, nur zu einer geringen Verfärbung der Glasschmelze führt. Ganz besonders bevorzugt ist die oxidationsbeständige Legierung eine PtRh20-Legierung, die noch kostengünstiger ist und zu einer noch geringeren Verfärbung der Glasschmelze führt.

Bevorzugt werden das Gefäß und der rohrförmige Auslass mit Hilfe von zumindest zwei unabhängig voneinander steuer- oder regelbaren Heizvorrichtungen beheizt. Somit lässt sich gewährleisten, dass das Gefäß selbst auf den vorgenannten relativ hohen Temperaturen gehalten wird, beispielsweise zum Läutern der Glasschmelze, während der rohrförmige Auslass oder zumindest dessen zweiter Abschnitt, der aus der oxidationsbeständigen Legierung mit niedrigerem Schmelzpunkt als das Iridium gebildet ist, auf einer Temperatur unterhalb des Schmelzpunktes der oxidationsbeständigen Legierung gehalten werden kann. Weiterhin lässt sich auch während der Heißformgebung der Glasschmelze ein geeignetes Temperaturprofil in der Vorrichtung realisieren, beispielsweise auch geringfügig unterschiedliche Temperaturen im Gefäß und in dem Auslaufrohr.

Der rohrförmige Auslass kann von einer externen Heizvorrichtung beheizt werden, beispielsweise von einer externen Induktionsspule, die den Auslass umgibt. Bevorzugt wird der rohrförmige Auslass elektrisch mittels einer Widerstandsheizung beheizt. Ganz besonders bevorzugt wird der Heizstrom direkt an die Wandung des rohrförmigen Auslasses angelegt.

Weil der rohrförmige Auslass bevorzugt aus zwei unterschiedlichen Materialien besteht, werden die Längen der beiden Abschnitte des rohrförmigen Auslasses und/oder deren Wandstärken bevorzugt so ausgelegt, dass sich ein im wesentlichen konstantes Temperaturprofil entlang des rohrförmigen Auslasses ergibt, wenn der Heizstrom durch dessen Wandung fließt. Vorteilhaft ist, dass aufgrund gleicher Widerstände in den unterschiedlichen Rohrabschnitten bevorzugt nur ein Heizkreis notwendig ist, um die Temperaturhomogenität des rohrförmigen Auslasses zu gewährleisten. Dadurch ergibt sich ein geringerer technischer, sowie ein geringerer Kostenaufwand. Ist aufgrund technischer Anforderungen eine Anpassung der Widerstände in den Rohrsegmenten nicht möglich, kann auch ein zweiter Heizkreis verwendet werden.

Bei Ausführungsformen, bei denen der erste Abschnitt des rohrförmigen Auslasses aus Iridium oder einem hoch-iridiumhaltigen Material gebildet ist und bei denen die oxidationsbeständige Legierung des zweiten Abschnittes aus PtRh20 oder PtRh30 gebildet ist, kann das Verhältnis einer Länge des ersten Abschnittes zu einer Länge des zweiten Abschnittes beispielsweise etwa 2,0 betragen und kann eine Wandstärke des ersten Abschnittes beispielsweise etwa 70 % der Wandstärke des zweiten Abschnittes betragen.

Sofern der erste und/oder zweite Abschnitt des rohrförmigen Auslasses aus mehreren Segmenten gebildet ist, sind diese bevorzugt stoffschlüssig miteinander verbunden, insbesondere mittels einer Schweißverbindung. Die Materialien des ersten und zweiten Abschnittes werden jedoch erfindungsgemäß zumeist einen deutlich unterschiedlichen Schmelzpunkt aufweisen. Somit ist es normalerweise schwierig, den ersten Abschnitt stoffschlüssig, insbesondere mittels einer Schweißverbindung, mit dem zweiten Abschnitt zu verbinden. Überraschenderweise haben die Erfinder herausgefunden, dass bei einem als Auslaufrohr ausgebildeten rohrförmigen Auslass sich eine Art Steckverbindung realisieren lässt, bei der der eine Abschnitt auf den anderen Abschnitt aufgeschoben wird, wobei sich die beiden Abschnitte geringfügig überlappen. In dem Überlappbereich kann eine kraft- oder reibschlüssige Verbindung der beiden Abschnitte bestehen. Überraschenderweise gewährleistet die vorgenannte Steckverbindung auch ohne Verschweißung der beiden Abschnitte miteinander, dass keine Glasschmelze seitlich aus dem Auslaufrohr austreten kann. Weiterhin wurde festgestellt, dass der bekannt Kirkendall-Effekt ( Porenbildung in Ir durch Eindiffussion desselben in das Pt/Rh20) während der Laufzeit der Vorrichtung keine Auswirkungen auf die mechanische Stabilität hatte. Auch hier konnte kein Glasaustritt aufgrund Rissbildung beobachtet werden.

Bevorzugt ist die vorgenannte Steckverbindung derart realisiert, dass eine Wulst aus niedrig schmelzendem Material des zweiten Abschnittes um das hoch schmelzende Material des ersten Abschnittes anliegt, die durch beim Erstarren entstehende Spannungen verklemmt ist.

Bevorzugt ist das Gefäß zur Aufnahme der Glasschmelze von einer Abdeckung abgedeckt, die einer thermischen Isolierung der Glasschmelze und/oder einem weiteren Schutz der Glasschmelze vor der Umgebungsatmosphäre dient. Die Abdeckung kann aus einer Keramik gebildet sein. Bevorzugt weist die Abdeckung einen Deckel auf, der beim Niederschmelzen des Rohmaterials der Glasschmelze zum Einführen weiteren Rohmaterials geöffnet werden kann, beispielsweise durch Schwenken oder Verschieben. Bevorzugt ist der Deckel aus einer oxidationsbeständigen Legierung gebildet, bevorzugt aus einer PtRh20-Legierung, die kostengünstig erhältlich ist und ausreichend formstabil und reaktionsträge ist.

Es können aber auch Ir oder Ir-Legierungen als Deckel verwendet werden. Hierbei besteht analog zum Oxidationsschutz des Ablaufrohrs die Möglichkeit, für den Deckel eine Kombination mit einem oxidationsbeständigen Edelmetall bzw. einer Edelmetalllegierung und mit Iridium oder einer hoch-iridiumhaltigen Legierung zu verwenden, wobei das Iridium bzw. die hoch-iridiumhaltige Legierung innerhalb des Behälters mit der Schutzgasatmosphäre angeordnet ist und das oxidationsbeständige Edelmetall bzw. die Edelmetalllegierung auch außerhalb des Behälters mit der Schutzgasatmosphäre angeordnet sein kann. Bevorzugt wird als Edelmetalllegierung bei dieser Ausführungsform eine Pt/Rh20-Legierung verwendet wird.

Bei einer weiteren Ausführungsform können das Gefäß und die Abdeckung druckdicht ausgelegt sein. Zu diesem Zweck können der obere Rand des Gefäßes und ein Innenumfangsrand der Abdeckung plan geschliffen sein und kann ein Dichtmittel, beispielsweise ein Metallring, auf dem oberen Rand des Gefäßes vorgesehen sein. Bei dieser Ausführungsform weist das Gefäß einen Gaseinlass auf, sodass dem Innenvolumen des Gefäßes ein unter Überdruck stehendes Gas zugeführt werden kann, um den Austritt der Glasschmelze aus dem rohrförmigen Auslass weiter zu fördern. Der Überdruck in dem Gefäß kann beispielsweise auch den abnehmenden hydrostatischen Druck beim Austritt der Glasschmelze aus dem Gefäß ausgleichen. Zur Steuerung oder Regelung des Überdrucks in dem Gefäß kann eine Steuer- oder Regelungseinrichtung vorgesehen sein, der ein Signal eines in dem Gefäß oder in der Abdeckung vorgesehenen Druckaufnehmers eingegeben wird.

Zum Aufbau eines gewissen Überdruckes in dem Gefäß wird bevorzugt ein inertes Gas verwendet. Besonders bevorzugt weist dieses inerte Gas dieselbe Zusammensetzung wie das zum Aufbau einer Schutzgasatmosphäre in dem Behälter verwendete Gas auf.

Bei den erfindungsgemäß realisierbaren relativ hohen Temperaturen werden die mit der vierten Potenz der Temperatur ansteigenden Wärmestrahlungsverluste besonders gravierend. Um ein homogenes Temperaturprofil in dem Gefäß zu gewährleisten, weist das Gefäß bevorzugt ein Öffnungsverhältnis h/L auf, das sehr viel größer als eins ist, wobei h eine maximale Innenhöhe des Gefäßes und L ein maximaler Abstand von Seitenwänden des Gefäßes bzw. der Durchmesser des zylindrischen Gefäßes ist. Zweckmäßig ist das Öffnungsverhältnis größer als etwa 2,0, bevorzugter größer als etwa 3,0 und noch bevorzugter größer als etwa 4,0. Aufgrund der höheren Temperatur ergibt sich allerdings auch eine höhere Strahlungsleistung. Somit kann man im Vergleich zum Stand der Technik wieder zu kleineren Verhältnissen kommen. Diese werden notwendig, um eine Erhöhung des schmelzbaren Volumens mit geringem technischem Aufwand zu realisieren, da das Volumen zwar proportional zur Höhe aber proportional zum Quadrat des Durchmessers ist.

Bevorzugt wird dem Behälter zum Aufbau einer ausreichenden Schutzgasatmosphäre zumindest vorübergehend ein inertes Schutzgas zugeführt. Zu diesem Zweck weist der Behälter einen Gaseinlass zum Zuführen eines inerten Schutzgases in das Innenvolumen des Behälters auf, der den Behälter mit einem Gasreservoir verbindet. Bevorzugt ist das inerte Schutzgas so ausgelegt, um in dem Innenvolumen des Behälters neutrale bis leicht oxidierende Bedingungen aufrecht zu erhalten.

Als inertes Schutzgas eignen sich insbesondere Argon oder Stickstoff, die einfach zu handhaben und kostengünstig erhältlich sind. Die Erfinder haben in aufwändigen Versuchsreihen herausgefunden, dass Gemische mit einem Sauerstoffgehalt zwischen etwa 5x10⁻³ % und etwa 5 % und bevorzugter zwischen etwa 0,5 % und etwa 2 % von Vorteil sind, weil diese Reaktionen zwischen dem Material des Gefäßes und den Glaskomponenten unterbinden können, insbesondere durch Reduktion von Glaskomponenten mit anschließender Legierungsbildung. Im Vergleich zu herkömmlichen Schmelztiegeln, bei denen überwiegend Wolfram oder Molybdän als Trägermaterial für eine Innenauskleidung des Schmelztiegels verwendet wird, kann erfindungsgemäß auf die Verwendung eines wasserstoffhaltigen Schutzgases ganz verzichtet werden, was zu einer Vereinfachung des Aufbaus und zu einer größeren Anwendungsbreite hinsichtlich der Glaszusammensetzung führt. Weiter können erfindungsgemäß die üblichen Redoxläutermittel, beispielsweise As₂O₃, Sb₂O₃, SnO₂, verwendet werden. Auf die Verwendung von teurem He zur Blasenverminderung beim Läutern der Glasschmelze kann grundsätzlich auch verzichtet werden.

Zum Aufbau der Schutzgasatmosphäre kann der Behälter kontinuierlich von dem Schutzgas durchströmt werden. Bevorzugt weist der Behälter eine Abdeckung auf, die nicht nur der thermischen Isolierung des in dem Behälter angeordneten Gefäßes dient, sondern auch einer gewissen Rückhaltung des Schutzgases in dem Innenvolumen des Behälters. Auf diese Weise kann ein Fließgleichgewicht der Schutzgasatmosphäre bei geringem Durchfluss des Schutzgases gewährleistet werden.

Gemäß einer weiteren Ausführungsform kann der Behälter druckdicht ausgelegt sein, so dass ein Austausch des Schutzgases in dem Innenvolumen des Behälters mit der Umgebungsatmosphäre gänzlich unterdrückt werden kann. Zum Abbau eines Überdrucks kann ein Überdruckventil in dem Behälter vorgesehen sein. Ferner kann ein Gasauslass zum Auslassen des inerten Schutzgases aus dem Innenvolumen des Behälters vorgesehen sein.

Bevorzugt wird das Gefäß von einer Induktionsspule beheizt, die um das Gefäß gewickelt ist. Die Grundform der Induktionsspule ist bevorzugt an die Grundform des Gefäßes angepasst, wobei das Gefäß bevorzugt punktsymmetrisch innerhalb der Induktionsspule angeordnet ist. Die Induktionsspule ist unter einem geeigneten, geringen Abstand zu dem Gefäß angeordnet und erstreckt sich bevorzugt über die gesamte Höhe des Gefäßes. Bevorzugt ist die Induktionsspule spiralförmig mit einer von 0° verschiedenen Steigung um das Gefäß gewickelt, weil sich so noch homogenere Temperaturprofile erzielen lassen. Die Induktionsspule kann jedoch auch mäanderförmig, von der Seite aus betrachtet in rechteckförmige Segmente unterteilt, um das Gefäß gewickelt sein, mit einer Steigung der einzelnen Segmente der Induktionsspule von im wesentlichen 0°. Bevorzugt ist die Induktionsspule wassergekühlt.

Bevorzugt ist zwischen der Seitenwand des Gefäßes und der Induktionsspule eine hitzebeständige Hülle, bevorzugt mit derselben Grundform wie das Gefäß, angeordnet. Sofern der Querschnitt des Gefäßes kreisförmig ist, ist die Hülle als Zylinder ausgebildet. Das Material des Zylinders oder der Hülle soll den in der Umgebung des Gefäßes vorherrschenden Temperaturen standhalten. Bevorzugt werden deshalb Materialien, die auch bei Temperaturen von etwa 1750°C noch ausreichend formstabil sind, beispielsweise Keramikfaserschutzrohr aus ZrO₂- oder Al₂O₃-Fasern. Die Verwendung von Fasermaterialien erweist sich aufgrund einer niedrigeren Wärmeleitfähigkeit als bei massiven Keramikmaterialien als vorteilhaft. Es können aber auch keramische Werkstoffe verwendet werden, welche bei 1750°C eine ausreichende Stabilität und Isolationswirkung aufweisen, beispielsweise Silimannit.

Bevorzugt ist zwischen der Seitenwand des Gefäßes und der Hülle oder dem Zylinder eine Schüttung von hitzebeständigen Kügelchen vorgesehen. Die Kügelchen brauchen nicht zwingend kugelförmig ausgebildet sein, sondern können auch beispielsweise eine elliptische Form aufweisen oder unregelmäßig gestaltet sein. Die sowohl an der Außenwand des Gefäßes als auch an der Innenwand des Zylinders oder der Hülle anliegende Schüttung bewirkt eine Vergleichmäßigung der Drücke und einer Aufnahme von mechanischen Spannungen um das Gefäß herum. Die Schüttung wirkt somit etwaigen Verformungen des Gefäßes, etwa aufgrund einer Erweichung der Seitenwände des Gefäßes, entgegen. Insgesamt lässt sich somit auch bei den erfindungsgemäß sehr hohen Temperaturen bis ca. 2000°C, bevorzugt ca. 2200°C, eine ausreichende Formstabilität des zum Glasschmelzen und Läutern verwendeten Gefäßes erzielen. Weiterhin gewährleisten sie eine ausreichende Isolationswirkung, um die o.g. Materialien als hitzebeständige Hülle verwenden zu können.

Bevorzugt strömt das zum Aufbau der Schutzgasatmosphäre verwendete inerte Gas auch durch die Kugelschüttung hindurch, um eine Oxidbildung des Gefäßes zu verhindern. Aufwändige Versuchsreihen der Erfinder haben ergeben, dass sich ein ausreichender Gasdurchfluss dann realisieren lässt, wenn die Kügelchen der Kugelschüttung einen Durchmesser von mindestens etwa 2,0 mm, bevorzugter von mindestens etwa 2,5 mm und noch bevorzugter von mindestens etwa 3,0 mm aufweisen. Grundsätzlich kann ein ausreichender Gasdurchfluss aber auch durch eine unregelmässige Oberflächengestaltung der Kügelchen bewirkt werden, bis hin zu einer Grundform, die eher quaderförmig sein kann. Bevorzugt sind die Kügelchen der Kugelschüttung aus Magnesiumoxid (MgO) gebildet, weil dieses Material ausreichend hitze- und oxidationsbeständig und formstabil ist. Die Verwendung von ZrO₂ ist ebenfalls möglich.

Gemäß einem weiteren Gesichtspunkt der vorliegenden Erfindung wird auch ein Verfahren zur Herstellung von hoch schmelzenden Gläsern oder Glaskeramiken nach Anspruch 20 bereitgestellt.

Bei dem erfindungsgemäßen Verfahren wird die vorgenannte Vorrichtung nacheinander in zwei unterschiedlichen Betriebszuständen betrieben. In einem ersten Betriebszustand wird das Gemenge zum Niederschmelzen in das Gefäß eingebracht. Anschließend wird die Temperatur des Gefäßes auf die vorgenannten relativ hohen Temperaturen erhöht, bei denen die Glasschmelze in bekannter Weise geläutert wird. Diese Temperaturen liegen weit oberhalb der später gewählten Verarbeitungstemperatur der Glasschmelze. In dem ersten Betriebszustand wird der rohrförmige Auslass bevorzugt auf einer deutlich niedrigeren Temperatur gehalten wird, bei der die Glasschmelze erstarrt oder sich verfestigt, um in dem rohrförmigen Auslass einen Pfropfen zu bilden, der den rohrförmigen Auslass verstopft und ein Auslaufen der Glasschmelze verhindert. Um ein noch homogeneres Endprodukt zu erzielen, kann deshalb der erste Teil der bei der späteren Heißformgebung austretenden Glasschmelze auch ausgesondert werden. Während des Läutern kann die Heizung des rohrförmigen Auslasses ausgeschaltet sein oder zur Kompensation von Wärmeverlusten geeignet gesteuert oder geregelt werden.

In einem nachfolgenden zweiten Betriebszustand wird nach dem Läutern die Temperatur der Glasschmelze auf die eigentliche Verarbeitungstemperatur abgesenkt und wird der rohrförmige Auslass auf die Verarbeitungstemperatur erwärmt, so dass sich der Pfropfen löst und die Glasschmelze aus dem rohrförmigen Auslass austritt. In dem zweiten Betriebszustand können das Gefäß und der rohrförmige Auslass auf denselben oder auf unterschiedlichen Temperaturen gehalten werden.

Erfindungsgemäß lassen sich Temperaturen während des ersten Betriebszustands von zumindest etwa 2000° C, bevorzugter von zumindest etwa 2100° C und noch bevorzugter von zumindest etwa 2200° C realisieren. Bei diesen Temperaturen können grundsätzlich beliebige Glaszusammensetzungen behandelt werden.

Besonders bevorzugt werden erfindungsgemäß Glaszusammensetzungen behandelt, die etwa 80 Gewichts-% bis etwa 90 Gewichts-% SiO₂, etwa 0 Gewichts-% bis etwa 10 Gewichts-% Al₂O₃, etwa 0 Gewichts-% bis etwa 15 Gewichts-% B₂O₃ und weniger als etwa 3 Gewichts-% R₂O umfassen, wobei der Anteil von Al₂O₃ und B₂O₃ zusammen etwa 7 Gewichts-% bis etwa 20 Gewichts-% beträgt und R für ein Alkali-Element einer Gruppe bestehend aus Li, Na, K, Rb und Cs steht. Wie nachfolgend noch ausführlicher dargelegt werden wird, lassen sich auf diese Weise Übergangsgläser mit noch vorteilhafteren Eigenschaften erzielen, insbesondere im Hinblick auf deren optische Transmission, deren Wärmeausdehnung und deren Homogenität. Ferner lassen sich auch Cordierit-Gläser mit noch vorteilhafteren Eigenschaften herstellen.

Zweckmäßig kann die Glaszusammensetzung zusätzlich noch weitere hoch schmelzende Oxide bis etwa 20 Gewichts-% MgO und/oder bis etwa 10 Gewichts-%, bevorzugter bis etwa 5 Gewichts-% umfassen, beispielsweise TiO₂, ZrO₂, Nb₂O₅, Ta₂O₅, WO₃ oder MoO₃ oder Mischungen daraus.

Als besonders vorteilhaft hat es sich erwiesen, wenn die Glasschmelze in dem Gefäß während des ersten Betriebszustands bzw. während des Läuterns mit einer Rührvorrichtung, die aus Iridium oder einem hoch-iridiumhaltigen Material mit den vorstehend beschriebenen Eigenschaften gebildet ist, gerührt wird. Die Rührvorrichtung kann mit einem Gasreservoir verbunden sein, um zum Reduzieren der Glasschmelze ein Gas einzublasen. Weiterhin kann hiermit die Schmelze zusätzlich homogeniert werden. Weitere Effekte liegen in einer Beschleunigung des Aufschmelzverhaltens und der Läuterung. Auch eine Trocknen des Glases bzw. eine Verminderung der OH (Wasserabsorptionsbande) im NIR ist durch das Einblasen eines Gases zu erreichen. Auch kann hierdurch der Restgasgehalt des Glases abgesenkt werden, was vorteilhaft für eine spätere Heißnachverarbeitung sein kann.

Gemäß einem weiteren Gesichtspunkt der Erfindung gemäß Anspruch 32 wird ein hoch schmelzendes Glas oder eine hoch schmelzende Glaskeramik bereitgestellt, umfassend: 80 Gewichts-% bis 90 Gewichts-% SiO₂, 0 Gewichts-% bis 10 Gewichts-% Al₂O₃, 0 Gewichts-% bis 15 Gewichts-% B₂O₃, und weniger als 3 Gewichts-% R₂O, wobei der Anteil von Al₂O₃ und B₂O₃ zusammen 7 Gewichts- % bis 20 Gewichts- % beträgt. Das Glas oder die Glaskeramik zeichnet sich erfindungsgemäß dadurch aus, dass eine Transmission im sichtbaren Wellenlängenbereich zwischen 400 nm und 800 nm, bezogen auf eine Substratdicke von 20 mm, zumindest 65 %, bevorzugter zumindest 75 % und noch bevorzugter zumindest 80 % beträgt. Bevorzugt wird das Glas oder die Glaskeramik mit Hilfe der erfindungsgemäßen Vorrichtung oder des erfindungsgemäßen Verfahrens bereitgestellt. Gläser oder Glaskeramiken der vorgenannten Zusammensetzung und mit der vorgenannten vorteilhaft hohen Transmission im sichtbaren Wellenlängenbereich sind aus dem Stand der Technik derzeit nicht bekannt. Diese Gläser können beispielsweise als Sichtgläser in Ofenanlagen oder dergleichen verwendet werden.

Bevorzugt beträgt die Transmission im Bereich einer Wasser-Absorptionsbande bei 1350 nm zumindest 75 % und/oder beträgt die Transmission im Bereich einer Wasser-Absorptionsbande bei 2200 nm zumindest 50 %, bevorzugter zumindest 55 %. Solche vorteilhaft hohen optischen Transmissionen im nahen infraroten Spektralbereich für Gläser der vorgenannten Zusammensetzung sind aus dem Stand der Technik derzeit nicht bekannt.

Ein weiterer Gesichtspunkt der vorliegenden Erfindung betrifft die Verwendung des erfindungsgemäßen Glases als Übergangsglas zur Verbindung zweier Glassorten mit unterschiedlichen thermischen Ausdehnungskoeffizienten, beispielsweise zur Herstellung einer Schmelzverbindung zwischen Quarzglas und Duranglas, die aufgrund der großen Unterschiede in der Wärmeausdehnung (α - Wert: Quarzglas 0,5 x 10⁻⁶ K⁻¹; Duranglas 3,3 x 10⁻⁶ K⁻¹) schwierig zu realisieren ist. Bevorzugt werden die erfindungsgemäßen Gläser speziell in ihrem Ausdehnungsverhalten aufeinander abgestimmt und werden diese erfindungsgemäß in Stufen von α=1,3 x 10⁻⁶ K⁻¹ über α=2,0 x 10⁻⁶ K⁻¹ bis α=2,7 x 10⁻⁶ K⁻¹ miteinander verschmolzen, mit einer Toleranz von etwa 0,1 x 10⁻⁶ K⁻¹.

Nachfolgend werden bevorzugte Ausführungsbeispiele der Erfindung unter Bezugnahme auf die beigefügten Zeichnungen beschrieben werden, woraus sich weitere Merkmale, Vorteile und zu lösenden Aufgaben ergeben werden, die ausdrücklich Gegenstand der vorliegenden Anmeldung sein sollen. Es zeigen:
- Fig. 1: in einem schematischen Querschnitt eine Vorrichtung gemäß dem Stand der Technik;
- Fig. 2: in einem schematischen Teilschnitt einen Schmelztiegel mit einem Auslaufrohr gemäß der vorliegenden Erfindung;
- Fig. 3: in einem schematischen Querschnitt eine Vorrichtung gemäß der vorliegenden Erfindung; und
- Fig. 4: die spektrale Transmission eines beispielhaften Glases gemäß der vorliegenden Erfindung.

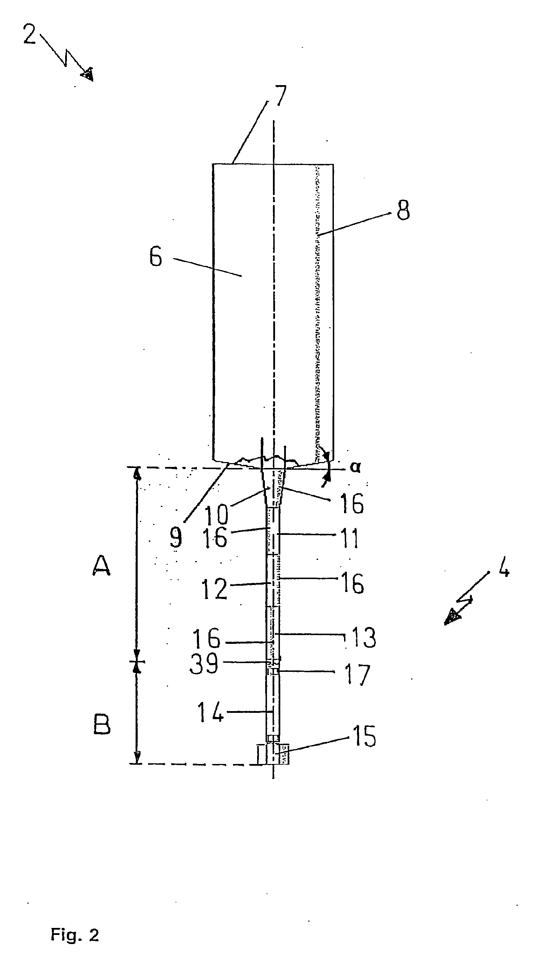

Die Fig. 2 zeigt in einem schematischen Teilschnitt einen als Gefäß zur Aufnahme einer Glasschmelze dienenden Schmelztiegel 2 mit einem Auslaufrohr 4 gemäß der vorliegenden Erfindung. Im oberen Teil weist der Schmelztiegel 2 eine Tiegelwand 6 auf, die aus einem Blech gefertigt ist, das geeignet zugeschnitten wird und entlang der Schweißnaht 8 durch Schweißen stoffschlüssig verbunden wird. Geeignete Einkerbungen in dem Blech sorgen dafür, dass auch der Boden 9 geeignet gebildet und mittels einer nicht dargestellten Schweißnaht mit dem Rest der Tiegelwand 6 verbunden wird.

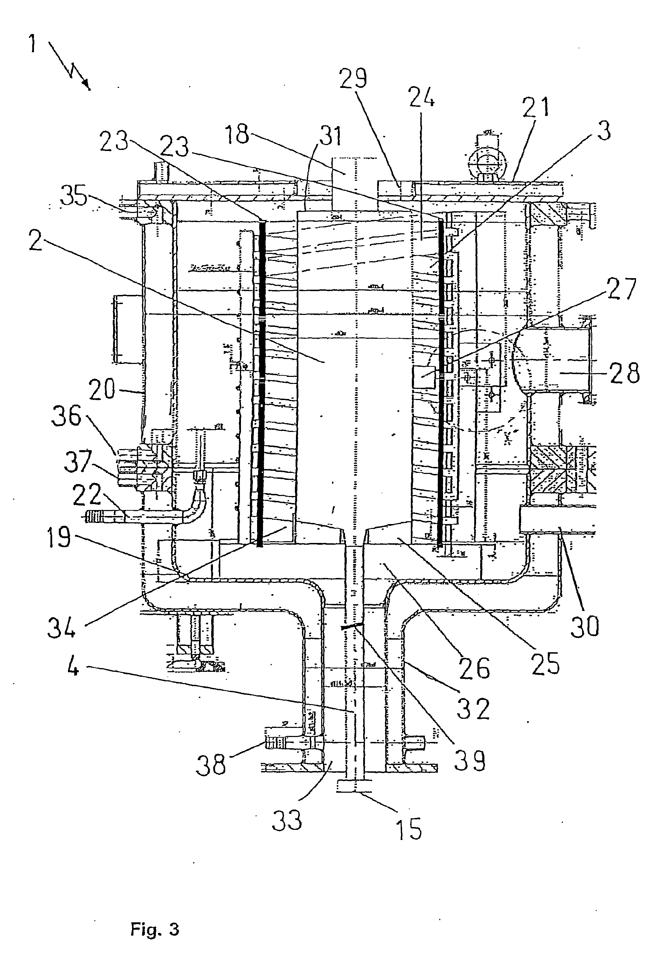

Insgesamt weist der obere Teil des Schmelztiegels 6 eine schlanke Grundform auf, sodass eine den Schmelztiegel 2 umgebende Heizvorrichtung, wie beispielhaft in der Fig. 3 dargestellt, für eine gleichmäßige Erwärmung der in dem Schmelztiegel 2 aufgenommenen Glasschmelze führt. Ein Öffnungsverhältnis h/L des zylindrischen Teils des Schmelztiegels 2 ist bevorzugt zumindest größer als etwa 2,0, bevorzugter größer als etwa 3,0 und noch bevorzugter größer als etwa 4,0, wobei h eine maximale Innenhöhe des zylindrischen Teils des Schmelztiegels 2 und L ein maximaler Abstand von Seitenwänden bzw. der Durchmesser des zylindrischen Teils des Schmelztiegels 2 ist.

Wie in der Fig. 2 dargestellt, ist der Boden 9 um einen Winkel alpha im Bereich von bis zu 20°, bevorzugt im Bereich von etwa 10°, radial einwärts geneigt, um ein Auslaufen der Glasschmelze zu unterstützen. Grundsätzlich kann der Boden 9 auch gewölbt oder flach ausgebildet sein.

In der Mitte des Bodens 9 beginnt das als rohrförmiger Auslass dienende Auslaufrohr 4, das aus mehreren Segmenten 10 bis 14 gebildet ist. Bei dem dargestellten Beispiel weist das Auslaufrohr 4 einen runden Querschnitt auf. Das Auslaufrohr 4 kann auch einen anderen geeigneten Querschnitt aufweisen. Die einzelnen Segmente 10 bis 14 sind jeweils aus einem Blech gefertigt, das geeignet zugeschnitten und entlang der jeweiligen Schweißnaht 16 zu einem rohrförmigen Gebilde verbunden wird. Das oberste Segment 10 ist konisch geformt und ist mit dem Boden 9 des Schmelztiegels 2 verbunden. Die konische Form unterstützt ein Auslaufen der Glasschmelze aus dem zylindrischen Teil des Schmelztiegels 2 in das Auslaufrohr 4. Die weiteren Segmente 11 bis 14 sind im Wesentlichen geradlinig ausgebildet. In dem oberen Teil A des Auslaufrohrs 4 bestehen die Segmente 10 bis 13 aus Iridium oder einem hoch-iridiumhaltigen Material, wie nachfolgend ausgeführt. In dem unteren Teil B des Auslaufrohrs 4 besteht das Segment 14 oder die mehreren Segmente (nicht dargestellt) aus einer oxidationsbeständigen Legierung, bevorzugt aus PtRh30 oder PtRh20.

Am unteren Ende des Auslaufrohrs 4 ist eine Ziehdüse 15 angeordnet, die als Heißformgebungseinrichtung dient, um die aus dem Auslaufrohr 4 austretende Glasschmelze zu einem Formkörper zu formen. Erfindungsgemäß hergestellt werden können Vollkörper, beispielsweise Stäben, Blöcke oder Kügelchen aus einem hochschmelzendem Glas oder einer hochschmelzenden Glaskeramik, oder Hohlkörper, beispielsweise Rohre, aus einem hochschmelzendem Glas oder einer hochschmelzenden Glaskeramik.

Das Auslaufrohr 4 wird mit Hilfe eines elektrischen Stroms, der durch die Wände der Segmente 10 bis 14 fließt, widerstandsbeheizt. Zu diesem Zweck sind an dem Auslaufrohr 4 elektrische Anschlüsse zum Zuführen des Heizstroms vorgesehen. Ein elektrischer Anschluss befindet sich am Ende des Rohres mit dem Bezugszeichen 15, der zweite elektrische Anschluss befindet sich in doppelter Ausführung am Übergang zwischen den Elementen mit den Bezugszeichen 9 und 6, und zwar in der Fig. 2 um 180° relativ zueinander versetzt. Die Bezugszeichen 17 bezeichnen Anschlussfahnen zum Anbringen von Thermoelementen (nicht dargestellt).

Das konische Segment 10 ist mit dem Boden 9 des Schmelztiegels 2 über eine Schweißnaht verbunden. Auch die weiteren Segmente 11 bis 13 aus Iridium oder aus dem hoch-iridiumhaltigen Material sind bevorzugt mittels Schweißverbindungen miteinander verbunden. Die Schmelztemperaturen von Iridium oder einer hoch-iridiumhaltigen Legierung und andern oxidationsbeständigen Legierungen, die zur Ausbildung des Segments 14 des unteren Abschnittes B des Auslaufrohrs 4 verwendet werden, unterscheiden sich deutlich. Deshalb kann das Segment 14 aus der niedrig schmelzenden oxidationsbeständigen Legierung nicht mittels Schweißverbindung mit dem Segment 13 aus Iridium oder aus der hoch-iridiumhaltigen Legierung verbunden werden. Zur Verbindung dient erfindungsgemäß eine Art Steckverbindung, bei der das Segment 13 eng anliegend in das Segment 14 hineingeschoben wird. Der Außendurchmesser des Segments 13 und der Innendurchmesser des Segments 14 sind so aufeinander abgestimmt, dass sich beim Ausbilden der Steckverbindung eine Art Wulst aus dem Material der niedrig schmelzenden oxidationsbeständigen Legierung des Segments 14 um das Material des Segments 13 anlegt, die zur Abdichtung des Auslaufrohrs 4 in dem Übergangsbereich 39 zwischen dem Abschnitt A und dem Abschnitt B dient. Beim Durchfahren mehrerer Temperaturzyklen verklemmt sich die Wulst aufgrund von Spannungen, die beim wiederholten Erstarren der Segmente 13, 14 entstehen. Überraschenderweise hat sich gezeigt, dass auch ohne stoffschlüssige Verbindung der beiden Segmente 13, 14 ein unkontrolliertes Austreten der Glasschmelze durch Risse oder Löcher in dem Übergangsbereich 39 wirksam verhindert werden kann. Weiterhin wurde festgestellt, dass der bekannte Kirkendall-Effekt (Porenbildung in Ir durch Eindiffusion desselben in das Pt/Rh20) während der Laufzeit der Vorrichtung keine Auswirkungen auf die mechanische Stabilität hatte. Auch hier konnte kein Glasaustritt aufgrund Rissbildung beobachtet werden.

Gemäß einem bevorzugten Ausführungsbeispiel ist die Tiegelwand 6 des Schmelztiegels 2 aus einem Blech mit einer Länge von etwa 510 mm und einer Wandstärke von etwa 1,0 mm gefertigt. Der zylindrische Teil des Schmelztiegels 2 weist somit ein theoretisches Fassungsvermögen von etwa 17 Litern auf. Zur Ausbildung von Schmelztiegeln mit größerem Fassungsvermögen kann die Höhe des zylindrischen Teils vergrößert oder sowohl die Höhe als auch der Durchmesser des zylindrischen Teils 6 unter Skalierung des vorgegebenen Öffnungsverhältnisses h/L erhöht werden. Dabei ist zu beachten, dass die den zylindrischen Teil 6 des Schmelztiegels 2 umgebende Heizvorrichtung (siehe Fig. 3) derart ausgelegt wird, dass über dem Durchmesser und die Höhe des zylindrischen Teils 6 des Schmelztiegels 2 ein homogenes Temperaturprofil erzielt werden kann.

Gemäß einem bevorzugten Ausführungsbeispiel sind die Segmente 10 bis 14 und die Ziehdüse 15 des Auslaufrohrs 4 aus Blechen mit einer Wandstärke von etwa 1,0 mm gebildet wie folgt: Das erste konische Segment 10 weist eine Länge von 68 mm und einen Innendurchmesser von 40 mm auf, der sich am unteren Ende zu etwa 20 mm verjüngt; das nächste Segment 11 weist eine Länge von 90 mm und einen Innendurchmesser von 20 mm auf; die beiden nächsten Segmente 12, 13 weisen eine Länge von 80 mm und einen Innendurchmesser von 20 mm auf; das Segment 14 des Abschnittes B weist eine Länge von 145 mm und einen Innendurchmesser von 20 mm auf; die Ziehdüse 15 weist eine Länge von 35 mm und einen Innendurchmesser von 52 mm auf.

Insgesamt verhält sich somit die Länge des Abschnittes A zu der Länge des Abschnittes B des Auslaufrohrs 4 wie etwa 7:3. Bevorzugt sind die Segmente 10 bis 13 des Abschnittes A des Auslaufrohrs 4 aus Iridium oder einer hoch-iridiumhaltigen Legierung, wie nachfolgend beschrieben, gebildet, während die Segmente 14, 15 des Abschnittes B des Auslaufrohrs 4 aus einer PtRh-Legierung gebildet sind, die temperaturbeständig und oxidationsbeständig ist. Besonders zweckmäßig ist die Verwendung von PtRh30 oder noch bevorzugter von PtRh20 als Material der Segmente 14, 15 des Abschnittes B, weil dieses Material kostengünstig erhältlich ist, leicht verformbar ist, und bei den zur Heißformgebung verwendeten Temperaturen gemäß der Erfindung nur zu einer geringen Verfärbung der Glasschmelze beiträgt.

Bekanntermaßen unterscheidet sich die elektrische Leitfähigkeit von Iridium oder einer hoch-iridiumhaltigen Legierung von der einer PtRh-Legierung. Damit der Heizstrom, der durch die Wände der Segmente 10 bis 15 fließt, über die Länge des Auslaufrohrs 4 im Wesentlichen konstant ist, um ein homogenes Temperaturprofil zu erzielen, ist bei dem bevorzugten Ausführungsbeispiel die Wandstärke der Segmente 10 bis 13 aus Iridium oder der hoch-iridiumhaltigen Legierung etwa 0,7 mm, während die Wandstärke der Segmente 14, 15 aus PtRh20 etwa 1,0 mm beträgt, wenn das Verhältnis der Längen der Abschnitte A und B etwa 7:3 beträgt. Bei anderen Längenverhältnissen wird der Fachmann auf diesem Gebiet ohne weiteres andere Wandstärken der Segmente 10 bis 13 des Abschnittes A und der Segmente 14, 15 des Abschnittes B unter Verwendung der elektrischen Leitfähigkeiten der entsprechenden Materialien berechnen können.

Wie in der Fig. 2 dargestellt, ist der obere Rand 7 des Schmelztiegels 2 flach. Auf dem oberen Rand 7 wird, wie in der Fig. 3 dargestellt, eine Abdeckung 31 aufgelegt, die einer thermischen Isolierung der in dem Schmelztiegel 2 aufgenommenen Glasschmelze und einem weiteren Schutz der Glasschmelze vor der Umgebungsatmosphäre dient. Die Abdeckung 31 kann auf dem oberen Rand 7 aufgelegt sein. Die Abdeckung 31 kann auch so auf dem oberen Rand 7 aufgelegt und mit diesem verbunden sein, dass der Schmelztiegel 2 in gewissem Maße druckdicht abgeschlossen ist, sodass eine Atmosphäre mit einem gewissen Überdruck in dem Schmelztiegel 2 aufgebaut werden kann durch Einströmen eines Gases, bevorzugt eines Schutzgases, durch einen nicht dargestellten Gaseinlass in den Innenraum des Schmelztiegels 2 oberhalb des Pegels der Glasschmelze. Dieser Überdruck kann beispielsweise dazu verwendet werden, um den beim Austritt der Glasschmelze aus dem Auslaufrohr 4 geringer werdenden hydrostatischen Druck der Glasschmelze auszugleichen.

Die Tiegelwand 6 sowie die Segmente 10 bis 13 des Schmelztiegels 2 sind erfindungsgemäß aus Iridium mit einem Iridium-Anteil von mindestens etwa 99 %, bevorzugter von mindestens etwa 99,5 % und noch bevorzugter von mindestens etwa 99,8 % gebildet, sodass deren Schmelzpunkt etwa bei 2400°C liegt. Ganz besonders bevorzugt wird ein Iridium mit einem Iridium-Anteil von mindestens etwa 99,8 % und einem Anteil von Elementen aus der Platingruppe von mindestens etwa 99,95 %. Dabei beträgt der Anteil von Pt, Rh und W jeweils maximal etwa 1000 ppm, der Anteil von Fe maximal etwa 500 ppm, der Anteil von Ru maximal etwa 300 ppm, der Anteil von Ni etwa 200 ppm, der Anteil von Mo, Pd jeweils maximal etwa 100 ppm, der Anteil von Cu, Mg, Os, Ti jeweils maximal etwa 30 ppm und der Anteil von Ag, Al, As, Au, B, Bi, Cd, Cr, Mn, Pb, Si, Sb, V, Zn, Zr jeweils maximal etwa 10 ppm.

Als Materialien der Tiegelwand 6 und der Segmente 10 bis 13 des Schmelztiegels 2 kommen grundsätzlich auch hoch-iridiumhaltige Materialien, gebildet aus einer Platingruppe-Legierung, mit einem Iridium-Anteil von mindestens etwa 95 %, bevorzugter von mindestens etwa 96,5 % und noch bevorzugter von mindestens etwa 98 % in Betracht. Bei der Verarbeitung der vorgenannten Materialien ist zu beachten, dass diese relativ spröde sind und erst bei vergleichsweise hohen Temperaturen duktil werden.

Die Fig. 3 zeigt in einem schematischen Querschnitt eine Vorrichtung zur Herstellung von hochschmelzenden Gläsern oder hochschmelzenden Glaskeramiken, im diskontinuierlichen Betrieb gemäß der vorliegenden Erfindung. Die Vorrichtung 1 umfasst den Schmelztiegel 2 gemäß der Fig. 2, der in einem Behälter aufgenommen ist, der aus einem unteren Behälterabschnitt 19 und dem oberen Behälterabschnitt 20 gebildet ist. Der Schmelztiegel 2 ist in dem Behälter so aufgenommen, dass der obere Rand des Schmelztiegels 2 nicht über den oberen Rand des oberen Behälterabschnitts 20 vorsteht. Der obere Behälterabschnitt 20 ist von einer Abdeckung 21 bedeckt. Insgesamt ist der so ausgebildete Behälter ausreichend zu der Umgebungsatmosphäre abgeschlossen, sodass in dem Innenraum des Behälters, wo der Schmelztiegel 2 aufgenommen ist, eine Schutzgasatmosphäre ausgebildet werden kann, sodass eine unerwünschte Oxidbildung des Iridiums oder des hoch-iridiumhaltigen Materials des Schmelztiegels 2 und des Abschnittes A des Auslaufrohrs 4 (siehe Fig. 2) verhindert werden kann.

Um den Schmelztiegel 2 herum ist eine wassergekühlte Induktionsspule 3 angeordnet, die spiralförmig und mit nicht verschwindender Steigung um den Schmelztiegel 2 herum verläuft. Die Induktionsspule 3 ist unter einem geringen Abstand zu der Außenwand des Schmelztiegels 2 angeordnet, bevorzugt unter einem Abstand von etwa 60 bis 80 mm. Zwischen der Induktionsspule 3 und dem Schmelztiegel 2 befindet sich ein feuerfester Zylinder 23, der den Schmelztiegel 2 radial umgibt und an der Unterseite durch das zweite Bodenelement 26 und das erste Bodenelement 25 abgeschlossen ist. Der so entstehende Zwischenraum zwischen der Innenumfangsoberfläche des feuerfesten Zylinders 23 und der Außenumfangsoberfläche des Schmelztiegels 2 ist mit MgO-Kügelchen 24 aufgeschüttet, um eine ausreichende Formstabilität des Schmelztiegels 2 auch bei Temperaturen von oberhalb von etwa 2000°C zu gewährleisten. Die Kügelchen der Kugelschüttung 24 müssen bei den angegebenen Temperaturen ausreichend temperatur- und formstabil und oxidationsbeständig sein. Bevorzugt wird deshalb MgO als Material der Kugelschüttung verwendet, die vorliegende Erfindung ist jedoch nicht darauf beschränkt. Eine Verwendung von ZrO₂ ist beispielsweise auch realisierbar. Die Kügelchen der Kugelschüttung 24 können auch eine von der Kugelform abweichende Oberflächengestalt aufweisen. Insgesamt wird jedoch in dem Zwischenraum zwischen der Innenumfangsoberfläche des Zylinders 23 und der Außenumfangsoberfläche des Schmelztiegels 2 ein ausreichender Gasfluss, insbesondere Schutzgasfluss, aufrecht erhalten, sodass der Schmelztiegel 2 von einem inerten Schutzgas umströmt wird, um eine unerwünschte Oxidbildung des Iridiums oder des hoch-iridiumhaltigen Materials des Schmelztiegels 2 zu verhindern.

Die Erfinder haben herausgefunden, dass ein ausreichender Gasfluss in dem vorgenannten Zwischenraum gewährleistet werden kann, wenn die Kügelchen der Kugelschüttung 24 einen Durchmesser von zumindest etwa 2,0 mm aufweisen, bevorzugter von zumindest etwa 2,5 mm und noch bevorzugter von zumindest etwa 3,0 mm.

Bei einem bevorzugten Ausführungsbeispiel wird die Induktionsspule 3 durch einen Umrichter mit einer Anschlussleistung von etwa 50 kW bei einer Frequenz von etwa 10 kHz betrieben. Somit lassen sich auch im Langzeitbetrieb Temperaturen von oberhalb 2000°C in dem zylindrischen Abschnitt des Schmelztiegels 2 erzielen.

Zur Temperaturmessung des Schmelztiegels 2 ist an der Außenumfangsoberfläche des zylindrischen Abschnittes des Schmelztiegels 2 eine Iridium-Hülse 27 vorgesehen, in der ein geeigneter Temperatursensor angeordnet ist. Möglich ist auch eine Temperaturmessung mit Ir-PtIr40-Thermoelementen oder mit einem Zweifarben-Pyrometer, die über einen Lichtleiter (nicht dargestellt), bestehend beispielsweise aus einer Saphirfaser (um eine Temperaturmessung oberhalb 2000°C gewährleisten zu können) durch die Durchführung 28 des oberen Behälterabschnitts 20 hindurch eingeführt wird. Allerdings ist auch eine Temperaturmessung mittels Zweifarben-Pyrometer ohne Lichtleitfaser, abhängig von der Brennweite (Messentfernung) und der Größe der Messfläche, möglich. Zur Temperaturüberwachung befinden sich auch weitere Thermoelemente, nicht dargestellt, beispielsweise vom Typ B, in dem ersten Bodenabschnitt 25 und/oder in dem zweiten Bodenabschnitt 26 sowie an anderen geeigneten Stellen in dem Behälter.

Wie vorstehend ausgeführt, ist der Behälter im Wesentlichen dreiteilig ausgebildet und umfasst den unteren Behälterabschnitt 19, den oberen Behälterabschnitt 20 und die Abdeckung 21. Diese Behälterabschnitte werden zweckmäßig aus einem geeigneten Edelstahl gefertigt. Der obere Behälterabschnitt 20 ist doppelwandig ausgebildet. Der Ringspalt zwischen der Innenwand und der Außenwand des oberen Behälterabschnittes 20 kann von einem Kühlmittel, bevorzugt Wasser, durchströmt werden. Zu diesem Zweck weist der obere Behälterabschnitt 20 einen oberen Kühlmittelanschluss 35 und einen unteren Kühlmittelanschluss 36 auf. Die Seitenwände des oberen Behälterabschnitts 20 sind zylindrisch ausgebildet, in Anpassung an die Grundform des Schmelztiegels 2 und der diesen umgebenden Induktionsspule 3. Der Abstand zwischen der Innenwand des oberen Behälterabschnitts 20 und der Außenumfangsoberfläche der Induktionsspule 3 ist ausreichend gewählt, um ein Schmelzen der Innenwand des Behälterabschnitts 20 bei Anlegen der üblichen Heizleistungen an die Induktionsspule 3 wirkungsvoll zu verhindern. Bei einem bevorzugten Ausführungsbeispiel beträgt der Abstand zwischen der Innenwand des oberen Behälterabschnitts 20 und der Außenumfangsoberfläche der Induktionsspule 3 etwa 120 mm.

Der obere Behälterabschnitt 20 ist auf den unteren Behälterabschnitt 19 aufgeflanscht. Der untere Behälterabschnitt 19 ist insgesamt glockenförmig ausgebildet und umfasst zwei zylindrische Abschnitte mit jeweils unterschiedlichen Außendurchmessern. Der obere zylindrische Abschnitt des unteren Behälterabschnitts 19 dient der Aufnahme des Schmelztiegels 2 und von diesen abstützenden Bodenelementen 25, 26, während der untere zylindrische Abschnitt des unteren Behälterabschnitts 19 der Aufnahme und Durchführung des Auslaufrohrs 4 zu der Umgebungsatmosphäre dient. Auch der Ringspalt des unteren Behälterabschnittes 19 kann von einem Kühlmittel, bevorzugt Wasser, durchströmt werden, zu welchem Zweck ein oberer Kühlmittelanschluss 37 und ein unterer Kühlmittelanschluss 38 an dem unteren Behälterabschnitt 19 vorgesehen ist.

Auf den oberen Umfangsrand des oberen Behälterabschnitts 20 ist die Abdeckung 21 aufgesetzt, bevorzugt aufgeflanscht, die aus Edelstahl besteht. Die Abdeckung 21 kann durch Lösen von nicht dargestellten Schraubbolzen abgehoben werden oder kann schwenkbar oder seitlich verschiebbar gelagert sein, um einen Austausch des in dem Behälter aufgenommenen Schmelztiegels 2 zu gewährleisten. Oberhalb des Schmelztiegels 2 befindet sich ein Deckelstein 29, der aus einem geeigneten hitzebeständigen Material gebildet ist, beispielsweise aus MgO oder Mullit, bevorzugt mit einer Verkleidung aus Edelmetalllegierung (Pt/Rh30). Auch der Deckelstein 29 kann aus der Öffnung der Abdeckung 21 heraus genommen oder heraus geschwenkt werden, beispielsweise für Wartungs- und Montagearbeiten an dem in dem Behälter aufgenommenen Schmelztiegel 2. Wie in der Fig. 3 dargestellt, ist der Schmelztiegel 2 an seinem oberen Rand von einer Abdeckung 31 abgeschlossen, die ihrerseits einen Mantel 18 aufweist, der zylindrisch geformt ist und den Deckelstein 29 zur Umgebungsatmosphäre hin durchdringt. Die Bauart dieses Deckels kann entweder komplett in Ir oder Ir-Legierungen oder in Pt-Legierungen, bevorzugt Pt/Rh 20 ausgeführt sein. Auch eine Kombination der beiden Legierung (Teil 31 aus Ir und Teil 18 aus oxidationsbeständigem Edelmetall, beispielsweise Pt/Rh20) ist möglich. Der Deckelstein 40, bevorzugt aus keramischem Material (MgO, Mullit) oder in Edelmetall eingefasster Keramik, kann zum Einbringen von Glasgemenge oder Rohmaterial in den Schmelztiegel 2 während des Niederschmelzens der Glasschmelze abgenommen und wieder aufgesetzt werden.

Zum Durchführen weiterer Kabel und Leitungen in das Innenvolumen des Behälters ist eine Durchführung 30 in dem unteren Behälterabschnitt 19 vorgesehen. Durch die Mediendurchführung 30 kann insbesondere auch eine separate Gasleitung (nicht dargestellt) zu dem Schmelztiegel 2 hindurch geführt werden, um ein Innenvolumen des Schmelztiegels 2 gesondert von dem Innenvolumen des Behälters mit einer Schutzgasatmosphäre zu durchspülen oder mit Druck zu beaufschlagen. In letzterem Fall kann der Schmelztiegel 2 in gewissem Maße druckfest ausgelegt sein, sodass ein gewisser Überdruck in dem Schmelztiegel 2 aufgebaut werden kann. Zur Steuerung oder Regelung dieses Überdruckes kann in dem Schmelztiegel 2 ein Druckaufnehmer vorgesehen sein, dessen Kabel ebenfalls über die Mediendurchführung 30 nach außen hin geführt werden.

Wie in der Fig. 3 dargestellt, sitzt der Boden des Schmelztiegels 2 ganzflächig auf einem ersten Bodenelement 25 auf. Zu diesem Zweck ist das Profil des ersten Bodenelements 25 an die Form des Bodens des Schmelztiegels 2 angepasst, im dargestellten Ausführungsbeispiel verjüngend ausgebildet. Das erste Bodenelement 25 dient der mechanischen Abstützung des Schmelztiegels 2 und einer ausreichenden Wärmeisolierung. Bei einem bevorzugten Ausführungsbeispiel ist das erste Bodenelement 25 aus MgO gebildet.

Das den Schmelztiegel 2 abstützende erste Bodenelement 25, der feuerfeste Zylinder 23 und die Induktionsspule 3 liegen auf einem zweiten Bodenelement 26 auf, das auf dem Boden des unteren Behälterabschnitts 19 abgestützt ist. Das zweite Bodenelement 26 dient einer mechanischen Abstützung dieser Anordnung sowie einer ausreichenden thermischen Isolation. Zu diesem Zweck wird die Dicke des zweiten Bodenelements 26 ausreichend gewählt. Das Material des zweiten Bodenelements 26 muss ausreichend temperatur- und formstabil sowie oxidationsbeständig sein. Bei einem bevorzugten Ausführungsbeispiel ist das zweite Bodenelement 26 aus ZrSiO₄ gebildet.

Das erste Bodenelement 25 und das zweite Bodenelement 26 weisen eine Öffnung auf, durch die hindurch das Auslaufrohr 4 zu der Umgebungsatmosphäre durchgeführt wird. Der untere zylindrische Abschnitt des unteren Behälterabschnitts 19 umgibt das Auslaufrohr 4. Das Auslaufrohr 4 befindet sich bis auf einen geringen Anteil (Segment mit dem Bezugszeichen 15) des unteren Rohrabschnittes aus oxidationsbeständigem Edelmetall in dem unteren Behälterabschnitt und wird mit einem hier nicht dargestellten Verschlussteil zum Behälterabschnitt 19 gasdicht verschlossen, um ein Eindringen von Luftatmosphäre zu verhindern.

Erfindungsgemäß wird es bevorzugt, wenn der Übergangsbereich 39 zwischen dem Abschnitt A und dem Abschnitt B des Auslaufrohrs 4 (siehe Fig. 2) möglichst weit unterhalb der beiden Bodenelemente 25, 26 angeordnet. Bei entsprechender Auslegung des unteren Behälterabschnitts 19 können jedoch auch die Segmente des Abschnittes A des Auslaufrohrs 4 aus Iridium oder dem hoch-iridiumhaltigen Material derart heruntergekühlt sein, dass die Gefahr einer Oxidbildung des Iridiums oder der hoch-iridiumhaltigen Legierung verhindert werden kann. Die Lage des Übergangsbereichs 39 in der Fig. 3 soll deshalb nur der Erläuterung dienen und soll nicht maßstabsgetreu ausgelegt werden.

Wie in der Fig. 3 dargestellt, befindet sich in dem unteren Behälterabschnitt 19 ein Gaseinlass 22, der der Zufuhr eines Schutzgases in das Innenvolumen des Behälters dient. Der Gaseinlass 22 ist mit einer nicht dargestellten Gasleitung und einem nicht dargestellten Gasreservoir verbunden. Insgesamt wird somit der Behälter von einem Schutzgas durchspült und wird der in dem Behälter aufgenommene Schmelztiegel 2 von dem Schutzgas umspült, um eine unerwünschte Oxidbildung des Iridiums oder des hoch-iridiumhaltigen Materials des Schmelztiegels 2 sowie des Abschnittes A des Auslaufrohrs 4 (siehe Fig. 2) wirkungsvoll zu verhindern.

Das Schutzgas hält in dem Innenvolumen des Behälters neutrale bis leicht oxidierende Bedingungen aufrecht. Zu diesem Zweck kann ein Schutzgas mit einem Sauerstoffgehalt zwischen etwa 5x-10-³ % und etwa 5 % und bevorzugter zwischen etwa 0,5 % und etwa 2 % verwendet werden. Insgesamt ist das verwendete Schutzgas reaktionsträge und reagiert mit dem Iridium oder der hoch-iridiumhaltigen Legierung in vernachlässigbarem Umfang. Als inertes, reaktionsträges Schutzgas kommen insbesondere Argon oder Stickstoff in Betracht. Die vorgenannten geringfügigen Sauerstoffzusätze können Reaktionen zwischen dem Material des Schmelztiegels und Glaskomponenten unterbinden (Reduktion von Glaskomponenten mit anschließender Legierungsbildung). Weiterhin wird der Innenraum des Schmelztiegels mit Schutzgas gespült, um die Tiegelinnenwand gegen Oxidation durch Luftsauerstoff zu schützen.

Die Spülung mit dem Schutzgas kann auf die iridiumhaltigen Abschnitte des Schmelztiegels 2 beschränkt bleiben, da überraschenderweise gefunden wurde, dass ein Sauerstoffeinbruch mit nachfolgender zerstörerischer Oxidation des Schmelztiegels 2 nur in den obersten Zentimetern der Anordnung auftritt, die bei der Anordnung gemäß der Fig. 3 vorzugsweise aus einem PtRh20-Deckel 31 besteht. Es kann aber auch ein Deckel aus Iridium bzw. einer Iridium-Legierung verwendet werden, wenn geringe Edelmetallverluste durch Oxidation des Iridiums in Kauf genommen werden. Zu diesem Zweck kann ein gewisser Mindestabstand zwischen der Abdeckung 31 und dem Bereich des Schmelztiegels 2, der von der Induktionsspule 3 umgeben ist, vorgesehen sein.

Der Behälter braucht nicht druckdicht ausgelegt sein, da es ausreichend ist, wenn sich ein Fließgleichgewicht in dem Innenvolumen des Behälters ausbildet, das eine ausreichenden Schutzgasatmosphäre darin gewährleistet. Grundsätzlich kann der Behälter 5 jedoch auch druckdicht ausgebildet sein, um ein Eindringen von Sauerstoff aus der Umgebungsatmosphäre in das Innenvolumen des Behälters noch wirkungsvoller zu unterdrücken.

Durch die Verwendung von Iridium oder einer hoch-iridiumhaltigen Legierung für den Schmelztiegel können erfindungsgemäß Schmelztemperaturen von etwa 2000°C oder darüber hinaus erreicht werden. Hierdurch werden sämtliche physikalischen und chemischen Abläufe des Schmelzprozesses wesentlich beschleunigt. Die Prozesszeiten werden bei gleichzeitiger Qualitätssteigerung deutlich herabgesetzt. Somit lassen sich erfindungsgemäß Gläser oder Glaskeramiken mit neuen, überraschend vorteilhaften Eigenschaften erzielen.

Ganz allgemein wird die erfindungsgemäße Vorrichtung in zwei unterschiedlichen Betriebszuständen betrieben. Zunächst wird durch Öffnen des Deckels 18 ein Glasgemenge oder ein entsprechendes Rohmaterial sukzessive in den Schmelztiegel 2 eingebracht. Während dieser Phase des Niedrigschmelzens kann die Temperatur des Schmelztiegels 2, je nach Glasgemenge bzw. Rohstoff, auch vergleichsweise niedrig gewählt werden, bevorzugt wird die Temperatur des Schmelztiegels 2 jedoch bereits während des Niedrigschmelzens auf oberhalb von etwa 2000°C gehalten.

Zur weiteren Behandlung der Glasschmelze, insbesondere zum Läutern, wird die Temperatur des Schmelztiegels 2 mit Hilfe der Induktionsspule 3 auf einer Temperatur weit oberhalb einer späteren Verarbeitungstemperatur der Glasschmelze gehalten. Aufgrund der sehr hohen Temperaturen, die erfindungsgemäß möglich sind, können die Läuterprozesse sehr viel wirkungsvoller ablaufen. In diesem ersten Betriebszustand wird die Temperatur des Auslaufrohrs 4 vergleichsweise niedrig und unterhalb der Schmelztemperatur der Glasschmelze gehalten. In dem Auslaufrohr 4 bildet sich somit ein Pfropfen aus zähflüssiger oder erstarrter Glasschmelze aus, der ein Auslaufen der Glasschmelze aus dem Schmelztiegel 2 verhindert. Während des Läuterprozesses werden in der Glasschmelze übliche Läutermittel aktiviert. Zum Rühren der Glasschmelze in dem Schmelztiegel 2 kann auch eine nicht dargestellte Rührvorrichtung in dem Schmelztiegel 2 angeordnet sein oder durch die Abdeckung 31 hindurch in diesen eingeführt werden. Erfindungsgemäß besteht die Rührvorrichtung aus dem vorgenannten Iridium oder aus der vorgenannten hoch-iridiumhaltigen Legierung. Erfindungsgemäß kann die Rührvorrichtung selbst auch zum Einblasen von, beispielsweise reduzierenden, Gasen, verwendet werden.

Der Übergangsbereich zwischen flüssiger Glasschmelze und hoch viskosem oder erstarrtem Pfropfen ist fließend, befindet sich jedoch bevorzugt innerhalb des Auslaufrohrs 4. Innerhalb des Schmelztiegels 2 wird somit eine sehr homogene Glasschmelze ausgebildet.

Während des ersten Betriebszustandes braucht das Auslaufrohr 4 nicht notwendiger Weise erwärmt werden, weil durch entsprechende Auslegung des unteren zylindrischen Abschnittes des unteren Behälterabschnitts 19 für eine ausreichende Kühlung des Auslaufrohrs 4 durch Wärmeabstrahlung gesorgt werden kann. Grundsätzlich kann das Auslaufrohr 4 jedoch auch während des ersten Betriebszustands gesteuert oder geregelt erwärmt oder gekühlt werden.

Nach dem Läutern, wenn eine Glasschmelze mit ausreichender Qualität in dem Schmelztiegel 2 ausgebildet worden ist, wird die Temperatur der Glasschmelze in dem Schmelztiegel 2 zum Einnehmen eines zweiten Betriebszustands auf eine Verarbeitungstemperatur abgesenkt und wird das Auslaufrohr 4 auf die Verarbeitungstemperatur erwärmt. Die Verarbeitungstemperatur wird so gewählt, dass die Glasschmelze eine gewünschte Viskosität aufweist, bzw. zur Ausbildung von Formkörpern geeignet ist. Die Verarbeitungstemperatur liegt oberhalb des Schmelzpunktes der Glasschmelze und kann durch Ändern der Heizleistung der Induktionsspule 3 und der Heizleistung des Heizstroms an dem Auslaufrohr 4 verändert werden. Der Schmelztiegel 2 und das Auslaufrohr 4 können auch auf unterschiedlichen Temperaturen gehalten werden, beispielsweise mit einer Temperaturdifferenz von etwa 10 bis 40°C.

In dem zweiten Betriebszustand schmilzt oder erweicht der Pfropfen in dem Auslaufrohr 4, sodass die Glasschmelze aus dem Auslaufrohr 4 ausläuft. Dabei wird die Glasschmelze durch das Profil des Auslaufrohrs 4 und/oder durch weitere Heißformgebungseinrichtungen, beispielsweise eine Ziehdüse, wie diese in der Fig. 3 mit dem Bezugszeichen 15 angedeutet ist, geformt. Gemäß der Erfindung können sowohl Vollkörper, beispielsweise Stäbe, als auch Hohlkörper, beispielsweise Rohre, ausgebildet werden.

Statt zu Formkörpern aus Glas kann die austretende Glasschmelze auch abgeschreckt und somit zu Pulver weiter verarbeitet werden.

Mit der erfindungsgemäßen Vorrichtung lassen sich grundsätzlich sämtliche bekannten Glassorten herstellen. Besonders bevorzugt wird die erfindungsgemäße Vorrichtung jedoch für Gläser oder Glaskeramiken, die nur einen sehr geringen Anteil an Netzwerkwandlern, insbesondere Alkalioxiden, aufweisen oder für Gläser oder Glaskeramiken, die eine hohen Anteil hochschmelzender Oxide, beispielsweise SiO₂, Al₂O₃, ZrO₂, Nd₂O, oder Ta₂O₅, aufweisen. Gemäß der vorliegenden Erfindung umfasst das Glas oder die Glaskeramik einen Anteil von SiO₂ von etwa 80 Gewichts-% bis etwa 90 Gewichts-%, einen Anteil von Al₂O₃ von etwa 0 Gewichts-% bis etwa 10 Gewichts-%, einen Anteil von B₂O₃ von etwa 0 Gewichts-% bis etwa 15 Gewichts-% und weniger als etwa 3 Gewichts-% R₂O, wobei der Anteil von Al₂O₃ und B₂O₃ zusammen etwa 7 Gewichts-% bis etwa 20 Gewichts-% beträgt und R für ein Alkali-Element einer Gruppe bestehend aus Li, Na, K, Rb und Cs steht. Gläser der vorgenannten Zusammensetzung konnten mit Schmelztiegeln aus dem Stand der Technik nicht oder nicht in ausreichender Qualität hergestellt werden.

Zweckmäßig kann die Glaszusammensetzung zusätzlich noch weitere hoch schmelzende Oxide bis etwa 20 Gewichts-% MgO und/oder bis etwa 10 Gewichts-%, bevorzugter bis etwa 5 Gewichts-%, umfassen, beispielsweise TiO₂, ZrO₂, Nb₂O₅, Ta₂O₅, WO₃ oder MoO₃ oder Mischungen daraus.

Eine bevorzugte Verwendung gemäß der Erfindung betrifft die Herstellung so genannter Übergangsgläser, die zur Herstellung einer Schmelzverbindung zwischen einem Glas mit einem niedrigem thermischen Ausdehnungskoeffizienten und einem Glas mit einem hohen thermischen Ausdehnungskoeffizienten dienen, beispielsweise zwischen Quarzglas mit einem thermischen Ausdehnungskoeffizienten von 0,5x10⁻⁶ K⁻¹ und zwischen Duranglas mit einem thermischen Ausdehnungskoeffizienten von etwa 3,3x10⁻⁶ K⁻¹. Erfindungsgemäß lassen sich Übergangsgläser mit speziell auf die beiden zu verbindenden Glassorten abgestimmten thermischen Ausdehnungskoeffizienten herstellen, wie nachfolgend beschrieben.

Die Tabelle 1 fasst die Zusammensetzung und die ermittelten thermischen Ausdehnungskoeffizienten verschiedener Übergangsgläser zusammen, die gemäß der vorliegenden Erfindung und dem nachfolgenden Ausführungsbeispiel hergestellt wurden.

**Tabelle 1**

| Oxide in (Gewichts- %) | 8228 | 8229 | 8230 | Neu 1 | Neu 2 |
|---|---|---|---|---|---|
| SiO₂ | 82,1 | 87,0 | 83,6 | 83,0 | 82,5 |
| B₂O₃ | 12,3 | 11,6 | 11,0 | 12,5 | 8,6 |
| Al₂O₃ | 5,3 | - | 2,5 | 4,5 | 5,5 |
| Na₂O | - | 1,4 | 2,2 | - | - |
| K₂O | - | - | 0,3 | | |
| Läuterm. | 0,05-0,2 | 0,05-0,2 | 0,05-0,2 | 0,05-0,2 | 0,05-0,2 |
| α(x10⁻⁶) | 1,3 | 2,0 | 2,7 | 1,15 | 1,0 |

Die Übergangsgläser mit den Typenbezeichnungen 8228, 8229 und 8230 weisen einen thermischen Ausdehnungskoeffizienten von 1,3x10⁻⁶ K⁻¹, 2,0x10⁻⁶K⁻¹ bzw. 2,7x10⁻⁶ K⁻¹ auf und eignen sich deshalb hervorragend zur Herstellung einer Schmelzverbindung zwischen Quarzglas und Duranglas. Sämtliche der vorstehend in der Tabelle 1 bezeichneten Glassorten weisen einen Brechungsindex von kleiner als etwa 1,47 auf. Die Glassorten der Spalten 4 und 5 der Tabelle 1 können mit herkömmlichen, nicht-iridiumhaltigen Schmelztiegeln gemäß dem Stand der Technik nicht hergestellt werden.

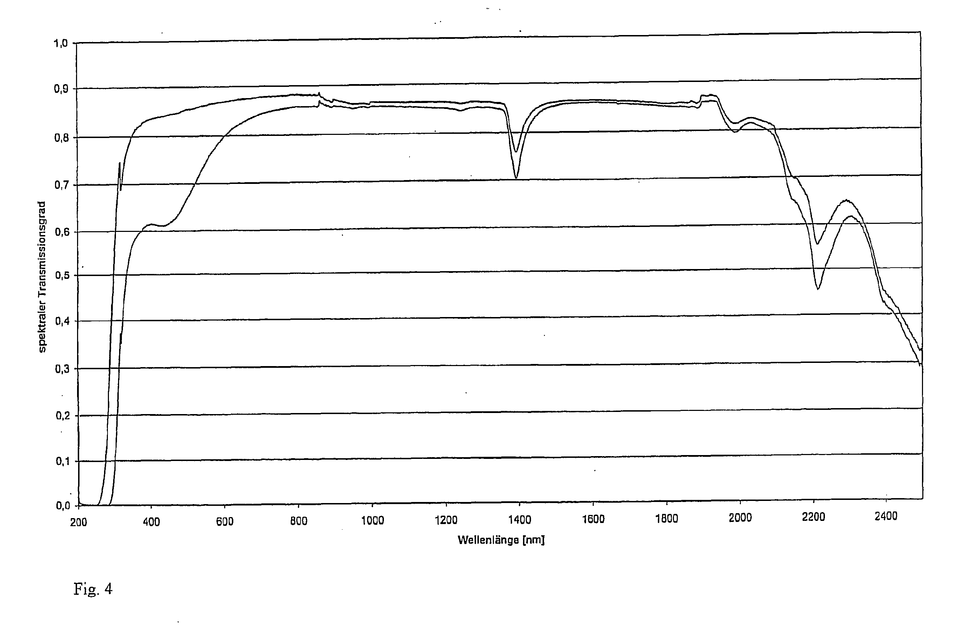

Aufgrund der erfindungsgemäß möglich gewordenen deutlich höheren Temperaturen lassen sich neuartige Gläser und Glaskeramiken der vorgenannten Zusammensetzung mit noch nicht da gewesenen Eigenschaften herstellen. Dies wird beispielhaft in der Fig. 4 dargestellt, die die spektrale Transmission der Glassorte 8228 gemäß der Tabelle 1 darstellt. In der Fig. 4 wird die spektrale Transmission einer Glassorte 8228, die mit einer erfindungsgemäßen Vorrichtung und gemäß dem nachfolgend ausführlich dargelegten Ausführungsbeispiel 1 hergestellt worden ist, verglichen mit der spektralen Transmission einer Glassorte identischer Zusammensetzung, die mit einem üblichen, nicht-iridiumhaltigen Schmelztiegel gemäß dem Stand der Technik bei Temperaturen von 1760°C hergestellt worden ist. In der Fig. 4 bezeichnet die obere Kurve die spektrale Transmission einer erfindungsgemäß hergestellten Glassorte 8228 gemäß dem nachfolgend dargelegten Ausführungsbeispiel 1 und bezeichnet die untere Kurve die spektrale Transmission einer Glassorte 8228 gemäß dem Stand der Technik.

Wie der Fig. 4 entnommen werden kann, ist die spektrale Transmission in dem nahen UV-Bereich höher und setzt um etwa 30 nm früher ein. Wie der Fig. 4 entnommen werden kann, ist die spektrale Transmission der erfindungsgemäßen Glassorte in dem sichtbaren Spektralbereich zwischen etwa 400 nm und etwa 800 nm deutlich größer als die spektrale Transmission der entsprechenden Glassorte gemäß dem Stand der Technik. Insbesondere zeichnet sich das erfindungsgemäße Glas dadurch aus, das die Transmission im vorgenannten sichtbaren Wellenlängenbereich, bezogen auf eine Substratdicke von etwa 20 mm, zumindest etwa 65 %, bevorzugter zumindest etwa 75 % und noch bevorzugter zumindest etwa 80 % beträgt. Derart hohe Transmissionen konnten für Glassorten gemäß dem Stand der Technik mit entsprechender Zusammensetzung nicht beobachtet werden und können im Stand der Technik wegen der durch die Verwendung von nicht-iridiumhaltigen Material für den Schmelztiegel bedingte deutlich niedrigere Verarbeitungstemperaturen auch nicht erzielt werden.

Wie der Fig. 4 ferner entnommen werden kann, sind auch die Wasser-Absorptionsbanden bei etwa 1350 nm und etwa 2200 nm bei dem erfindungsgemäßen Glas deutlich kleiner als die entsprechenden Wasser-Absorptionsbanden bei einem entsprechenden Glas gemäß dem Stand der Technik. Die kleineren Wasser-Absorptionsbanden sind auf die deutlich höheren Verarbeitungstemperaturen im Vergleich zum Stand der Technik zurückzuführen, die zu einem weiteren Austreiben von Wasser und zu einer noch wirkungsvolleren Reduktion von wasserstoffhaltigen Verbindungen in der Glasschmelze während des Läuterprozesses führen.

Insbesondere zeichnet sich die erfindungsgemäße Glassorte 8228, aber auch andere Glassorten mit erfindungsgemäßer Glaszusammensetzung, dadurch aus, dass, bezogen auf eine Substratdicke von etwa 20 mm, die Transmission im Bereich der Wasser-Absorptionsbande bei etwa 1350 nm zumindest etwa 75 % beträgt und/oder die Transmission, bezogen auf eine Substratdicke von etwa 20 mm, im Bereich der Wasser-Absorptionsbande bei etwa 2200 nm zumindest etwa 50 %, bevorzugter zumindest etwa 55 % beträgt.

Nachfolgend wird anhand von bevorzugten Ausführungsbeispielen die Herstellung von erfindungsgemäßen Gläsern oder Glaskeramiken beschrieben werden.

### Ausführungsbeispiel 1

Für das Glas 8228 (vergleiche Tabelle 1) wurden die nachfolgenden Bedingungen gewählt: Die nachfolgende Tabelle 2 fasst die Einwagen der verwendeten Rohstoffe für 26,25 kg des Glases mit der Zusammensetzung 8228 gemäß der Tabelle 1, Beispiel 1 (8228), zusammen:

**Tabelle 2**

| Oxid | Masse-% | Rohstoff | Einwaage [g] |
|---|---|---|---|
| SiO₂ | 82,1 | Quarzmehl | 18570 |
| B₂O₃ | 12,3 | Borsäure | 4952 |
| Al₂O₃ | 5,3 | Aluminiumhydroxid | 1845 |
| SnO₂ | 0,2 | Zinn(IV)-oxid | 45 |

Die Eigenschaften des erschmolzenen Glases sind ebenfalls in Tab. 1, Beispiel 1 (8228) aufgeführt. Aufgrund der einfacheren Handhabung wird das Gemenge in drei Chargen geteilt und einzeln eingewogen bzw. gemischt. Nach dem Mischen des Gemenges wird das Gemenge mit VE-Wasser angefeuchtet (3 x 800 ml ) und nochmals gemischt. Dies geschieht, um die Verstaubung des Gemenges beim Einlegen zu reduzieren. Nach dem Anfeuchten entstandene größere Gemengebrocken werden durch anschließendes Absieben entfernt und zerkleinert. Somit verringert man die Entstehung von Gemengeeinschlüssen und Gispen im Glas.

Die mittlere Temperatur beim Einlegen beträgt ca. 1990°C am Tiegel und ca. 1760 C° an der Glasoberfläche.

Die Einstellung der Temperatur wird manuell über die Spannung der Mittelfrequenzheizung vorgenommen. Hierbei liegt die eingestellte Spannung zwischen 65 % und 67 %, entsprechend 355V - 370V. Hierbei ergibt sich eine Leistung von ca. 55 % ( ~ 28kW) eines handelsüblichen Frequenzumrichters ( 50 kW maximaler Leistung).

Die Einlegemenge beträgt ca. 4-6 Porzellanlöffel ( je ca. 70g Gemenge ) alle 15 Minuten. Ein Eintrag von Luftsauerstoff über das lockere Gemenge kann bei diesem Verfahren nicht vermieden werden, ist aber auch von Vorteil, da er eine Reduktion der Glaskomponenten verhindert.

Während des Schmelzbetriebes ( T (Tiegel ) > 700 °) werden ca. 6 1/min Argon in den Behälterraum und ca. 3 1/min Argon in den eigentlichen Tiegelinnenraum eingeblasen. Alternativ sind für größere Anlagen aus Kostengründen auch andere Inertgase wie Stickstoff bzw. deren Mischungen zumindest im Außenraum denkbar. Im Tiegelinnenraum ist die Wechselwirkung mit dem Glas zu beachten. Allerdings ist ein geringer Anteil an Restsauerstoff ( bis ca. 2 % ) in Bezug auf die Reduzierung verschiedener Glaskomponenten nicht von Nachteil.

Bedingt durch das relativ große Schmelzvolumen ergibt sich zum Einschmelzen ein Zeitraum von 2 Tagen. Der zur Läuterung des Glases benötigte Zeitraum bleibt bei ähnlicher Glasbadhöhe annähernd gleich dem im 7-1-Aufbau. Aufgrund des im Durchmesser um 10mm kleineren Rohres (vgl. 30mm bei 7-1-Aufbau > 20mm bei Ir-Tiegel ) erhöht sich die Zeit zum Herstellen der Stäbe auf zwei Tage. Hier ist eine Durchsatzsteigerung durch Erhöhung des Rohrdurchmessers auf bis zu 35mm machbar.

Wie man obiger Aufstellung entnimmt, sind zwar die Prozesszeiten gegenüber Schmelztiegeln aus PtRh30 in etwa gleich geblieben, es hat sich jedoch das Volumen um den Faktor 2 erhöht, sodass der Durchsatz pro Zeiteinheit um den Faktor 2 angewachsen ist.

Die hohen Schmelztemperaturen ermöglichen weiterhin neben dem Einsatz von hochschmelzenden Rohstoffen die Verwendung von nicht toxischen Hochtemperaturläutermitteln wie z.B. SnO₂ statt As₂O₃. Die Mengenzugabe des auf den PtRh30-Tiegel abgestimmten Läutermittels kann entsprechend vermindert werden. Glaszusammensetzungen, die aufgrund ihrer hohen Viskosität nicht oder nur unter hohem Aufwand schmelzbar sind, können im Iridium-Tiegel wirtschaftlich hergestellt werden. Neben den hohen Temperaturen hat Iridium gegenüber der PtRh30-Legierung den Vorteil, weniger Farbstich (Rh) im Glas zu verursachen. Somit sind auch Produkte mit optischen Anforderungen darstellbar. Dies ist in der Fig. 4 dargestellt. Man erkennt deutlich die bessere Transmission im Sichtbaren der im Ir-Tiegel geschmolzenen Probe. Visuell besteht hier ein leicht gelber Farbeindruck, während bei Verwendung von PtRh30 ein deutlicher rötlich-bräunlicher Farbstich auftritt. Im IR-Spektralbereich sind die Wasserbanden weniger intensiv ausgebildet, was eine Folge der deutlich höheren Schmelztemperatur ist.

Nachfolgend sind weitere mit der erfindungsgemäßen Vorrichtung schmelzbare Gläser aufgeführt.

Cordieritähnliche Glaskeramiken deren Zusammensetzung für SiO₂ im Bereich zwischen 40% und 60 Gewichts-% für Al₂O₃ im Bereich zwischen 25 Gewichts-% und 45 Gewichts-% und für MgO im Bereich von 10 Gewichts-% - 20 Gewichts-% liegt. Zweckmäßig kann die Glaszusammensetzung zusätzlich noch weitere hoch schmelzende Oxide bis etwa 10 Gewichts-%, bevorzugter bis etwa 5 Gewichts-%, umfassen, beispielsweise TiO₂, ZrO₂, Nb₂O₅, Ta₂O₅oder WO₃ oder Mischungen daraus. Prinzipiell ist auch MoO₃ möglich, allerdings könnte seine Verwendung zu einer Färbung des Glases, je nach Anwendung, führen.

Mit der Anordnung von Schmelztiegel und Auslaufrohr lassen sich verschiedenartige Formkörper wie Stäbe, Fasern, Rohre, Ribbons (Glasstreifen) und Barren bzw. Gussstücke herstellen. Vor Beginn der Formgebung wird die Tiegeltemperatur abgesenkt und die Rohrheizung eingeschaltet. Die Temperatur am Ende des Auslaufrohrs wird auf die Verarbeitungstemperatur (entspricht einer Viskosität von 10⁴ dpa·s) eingestellt. Der Durchmesser des Formkörpers wird über die Parameter Temperatur und Ziehgeschwindigkeit eingestellt. Bei Rohren und Stäben ist zur Einstellung des Außendurchmessers am Ende des Rohres eine separat beheizte (direkt oder indirekt über eine Muffel) Düse angeordnet. Bei Rohren wird die Wandstärke über eine Doppeldüse eingestellt. Da es sich um einen diskontinuierlichen Prozess handelt, sinkt während der Formgebung der Glasstand im Tiegel, was einer Abnahme des statischen Drucks entspricht. Durch Regulierung der Ziehgeschwindigkeit (meist mittels einer Ziehmaschine bestehend aus zwei angetriebenen Rollen) bzw. Temperatur oder dem Druck über der Glasschmelze, wird der Abfall des Glasstands kompensiert. Die Abmaße der Formstücke sind jeweils von dem Rohr-Innendurchmesser abhängig. Beispielsweise werden mit einem 30 mm Rohrdurchmesser Stäbe von 20 mm bis zu 400 µm (Fasern) gefertigt. In Kombination mit einer Doppeldüse zur Herstellung von Rohren sind Abmaße von 18 mm bis zu Kapillaren möglich. Je nach Glasart bzw. Glaskeramik und der entsprechenden Ausdehnung entstehen während der Formgebung bei der Bedingung von α > 5 thermische Spannungen, welche aber durch eine gezielte thermische Nachbehandlung ausgeglichen werden. Durch die Verwendung von Iridium als Rohrmaterial und der daraus resultierenden geringen Benetzbarkeit (Haftung des Glases an der Rohrwandung) sind engere Fertigungstoleranzen realisierbar.

Bei der Herstellung von Ribbons läuft das Glas aus dem Auslaufrohr auf wassergekühlte rotierende Walzen. Der Rohrdurchmesser wird in Abhängigkeit zur Glasviskosität angepasst. Je nach Abstand der Walzen werden Glassteifen ohne definierte Maße hergestellt.

### Ausführungsbeispiel zur Herstellung von Cordierit-Ribbons

Für das Cordierit wurden die nachfolgenden Bedingungen gewählt:

Die nachfolgende Tabelle fasst die Einwagen der verwendeten Rohstoffe für 26,4 kg des Glases mit der Zusammensetzung gemäß Spalte 2 der Tabelle zusammen:

| Oxid | Masse-% | Rohstoff | Einwaage [g] |
|---|---|---|---|
| Al2O3 | 35 | Aluminiummonohydrat ( AlO(OH) ) | 11907,2 |
| MgO | 15 | Magnesiumcarbonat | 9000,0 |
| SiO2 | 50 | Quarzmehl | 13218,5 |

Die Eigenschaften des erschmolzenen Glases sind ebenfalls in der vorstehenden Tabelle für das Ausfühungsbeispiel Cordierit aufgeführt. Aufgrund der einfacheren Handhabung wird das Gemenge in drei Chargen geteilt und einzeln eingewogen bzw. gemischt. Nach dem Mischen des Gemenges wird das Gemenge mit VE-Wasser angefeuchtet (3 x 800 ml) und nochmals gemischt. Dies geschieht, um die Verstaubung des Gemenges beim Einlegen zu reduzieren. Nach dem Anfeuchten entstandene größere Gemengebrocken werden durch anschließendes Absieben entfernt und zerkleinert. Somit verringert man die Entstehung von Gemengeeinschlüssen und Gispen im Glas. Die mittlere Temperatur beim Einlegen beträgt ca. 1850°C am Tiegel. Die Einstellung der Temperatur erfolgt über einen Regler nach Vorgabe.

Die Einlegemenge beträgt ca. 6-8 Porzellanlöffel ( je ca. 70g Gemenge ) alle 15 Minuten. Ein Eintrag von Luftsauerstoff über das lockere Gemenge kann bei diesem Verfahren nicht vermieden werden, ist aber auch von Vorteil, da er eine Reduktion der Glaskomponenten verhindert.

Während des Schmelzbetriebes ( T (Tiegel ) > 700 °) werden ca. 6 1/min Argon in den Behälterraum und ca. 3 1/min Argon in den eigentlichen Tiegelinnenraum eingeblasen. Alternativ sind für größere Anlagen aus Kostengründen auch andere Inertgase wie Stickstoff bzw. deren Mischungen zumindest im Außenraum denkbar. Im Tiegelinnenraum ist die Wechselwirkung mit dem Glas zu beachten. Allerdings ist ein geringer Anteil an Restsauerstoff (bis ca. 2 %) in Bezug auf die Reduzierung verschiedener Glaskomponenten nicht von Nachteil.

Bedingt durch das relativ große Schmelzvolumen ergibt sich zum Einschmelzen ein Zeitraum von 1,5 Tagen. Da bei einer Fertigung von Ribbons die Blasenzahl keine Rolle spielt, kann die Läuterzeit mit 3-6 h sehr kurz gehalten und/oder eine niedrige Viskosität vorgegeben werden. Beim Walzen der Ribbons beträgt die Temperatur im Tiegel sowie im Rohr ca. 1650°C. Der Durchsatz beträgt ca. 200g/min bis 300g/min. Hieraus ergibt sich eine Durchsatzsteigerung gegenüber den herkömmlichen Verfahren um 100% bzw. 200%.

Wie dem Fachmann aus der vorstehenden Beschreibung ersichtlich werden wird, beinhaltet die vorliegende Erfindung eine Reihe weiterer Gesichtspunkte, die grundsätzlich auch gesondert unabhängig beansprucht werden könnten.

Mit dem vorgenannten Verfahren lassen sich grundsätzlich Glaskeramiken beliebiger Zusammensetzungen herstellen. Bevorzugt werden Glaskeramiken hergestellt, deren Zusammensetzung in den nachfolgenden Patenten bzw. Patentanmeldungen offenbart ist, deren Offenbarungsgehalt hiermit im Wege der Bezugnahme ausdrücklich in dieser Patentanmeldung mit beinhaltet sei: EP 0 220 333 B1 entsprechend US 5,212,122, DE 196 41 121 A1, DE 43 21 373 C2 entsprechend US 5,446,008, DE 196 22 522 C1 entsprechend US 5,922,271, DE 199 07 038 A1 entsprechend US 09/507,315, DE 199 39 787 A1 entsprechend WO 02/16279, DE 100 17 701 C2 entsprechend US 09/829,409, DE 100 17 699 A1 entsprechend US 09/828,287 und EP 1 170 264 A1 entsprechend US 6,515,263.

### Bezugszeichenliste

- 1: Schmelzvorrichtung
- 2: Schmelztiegel
- 3: Induktionsspule
- 4: Auslaufrohr
- 5: Heizvorrichtung
- 6: Tiegelwand
- 7: oberer Rand
- 8: Schweißnaht
- 9: Boden
- 10: Konisches Segment
- 11: Rohrabschnitt
- 12: Rohrabschnitt
- 13: Rohrabschnitt
- 14: Rohrabschnitt
- 15: Ziehdüse
- 16: Schweißnaht
- 17: Anschlüsse für Thermoelemente
- 18: Deckel
- 19: Unterer Behälterabschnitt
- 20: Oberer Behälterabschnitt
- 21: Abdeckung des oberen Behälterabschnitts
- 22: Gaseinlass
- 23: feuerfester Zylinder
- 24: Kugelschüttung
- 25: Ersts Bodenelement
- 26: Zweites Bodenelement
- 27: Hülse für Temperatursensor
- 28: Durchführung
- 29: Deckelstein
- 30: Durchführung für Medienversorgung
- 31: Abdeckung für Schmelztiegel 2
- 32: Abschirmung des Auslaufrohrs 4
- 33: Öffnung
- 34: Elektrischer Anschluss
- 35: Oberer Kühlmittelanschluss
- 36: Unterer Kühlmittelanschluss
- 37: Oberer Kühlmittelanschluss
- 38: Unterer Kühlmittelanschluss
- 39: Übergangsbereich
- 40: Deckelstein

## Patentansprüche

1. Vorrichtung zur Herstellung von hoch schmelzenden Gläsern oder Glaskeramiken, die zur Herstellung einen Prozess durchlaufen, während dem eine Temperatur von 1760° C überschritten wird, mit einem Gefäß (2) zum Aufnehmen einer Glasschmelze und einem Behälter (19, 20), der das Gefäß (2) aufnimmt, wobei das Gefäß (2) einen rohrförmigen Auslass (4) aufweist, welcher durch eine in dem Behälter ausgebildete Öffnung hindurch in die Umgebungsatmosphäre ragt, und wobei eine Heizeinrichtung (3) zum Heizen der Glasschmelze vorgesehen ist, **dadurch gekennzeichnet, dass** der rohrförmige Auslass (4) zumindest einen ersten Abschnitt (A) und einen diesem in Auslaufrichtung der Glasschmelze nachgeordneten zweiten Abschnitt (B) aufweist, der aus einer oxidationsbeständigen Legierung ausgebildet ist und der Umgebungsatmosphäre ausgesetzt ist, wobei das Gefäß (2) und der erste Abschnitt (A) des rohrförmigen Auslasses (4) aus Iridium, mit einem Iridium-Anteil von mindestens 99%, oder aus einem hoch-iridiumhaltigen Material gebildet ist, das eine Platingruppe-Metalllegierung mit einem Iridium-Anteil von mindestens 95 % ist, wobei der Behälter (19, 20) mit einem Gasreservoir verbunden ist, das dem Behälter ein Schutzgas zuführt, so dass das Gefäß (2) und der erste Abschnitt (10-13) des rohrförmigen Auslasses unter einer Schutzgasatmosphäre aufgenommen sind, um eine Oxidbildung des Iridiums oder des hoch-iridiumhaltigen Materials zu verhindern, wobei die Heizeinrichtung (3) ausgelegt ist, um die Glasschmelze auf eine Temperatur oberhalb von 1760° C aufzuheizen.

2. Vorrichtung nach Anspruch 1, bei der der erste (A) und/oder der zweite (B) Abschnitt in eine Mehrzahl von Segmenten (10-14) unterteilt ist, wobei zumindest ein Segment (14, 15) des zweiten Abschnittes (B) aus der oxidationsbeständigen Legierung gebildet ist und der Umgebungsatmosphäre ausgesetzt ist.

3. Vorrichtung nach Anspruch 1 oder 2, wobei der rohrförmige Auslass (4) als Heißformgebungseinrichtung (15) zum Formen der Glasschmelze zu einem Formkörper ausgebildet ist oder eine solche aufweist.

4. Vorrichtung nach einem der vorhergehenden Ansprüche, bei der das Iridium einen Iridium-Anteil von mindestens 99,5 % und noch bevorzugter von mindestens 99,8 % aufweist oder bei der das hoch-iridiumhaltige Material eine Platingruppe-Metalllegierung mit einem Iridium-Anteil von mindestens 96,5 % und noch bevorzugter von mindestens 98 % ist.

5. Vorrichtung nach einem der Ansprüche 2 bis 4, bei der die oxidationsbeständige Legierung eine Platingruppe-Metalllegierung ist, die 30 Gewichtsprozent bis 99 Gewichtsprozent Platin enthält und der ein Element aus einer Gruppe bestehend aus Iridium (Ir), Osmium (Os), Palladium (Pd), Rhodium (Rh) und Ruthenium (Ru) beigemischt ist, wobei die oxidationsbeständige Legierung bevorzugt eine PtRh30-Legierung und noch bevorzugter eine PtRh20-Legierung ist.

6. Vorrichtung nach einem der Ansprüche 2 bis 5, bei der ein Verhältnis einer Länge des ersten Abschnittes (A) zu einer Länge des zweiten Abschnittes (B) etwa 2,0 beträgt und eine Wandstärke des ersten Abschnittes etwa 70 % der Wandstärke des zweiten Abschnittes beträgt, wobei den Segmenten (10-14) des ersten (A) und des zweiten (B) Abschnittes ein Heizstrom von einer gemeinsamen Heizstromquelle zuführbar ist.

7. Vorrichtung nach einem der Ansprüche 2 bis 5, bei der den Segmenten (10-14) des ersten (A) und des zweiten (B) Abschnittes ein Heizstrom von gesonderten Heizstromquellen zuführbar ist.

8. Vorrichtung nach einem der Ansprüche 2 bis 7, bei der der rohrförmige Auslass als Auslaufrohr (4) ausgebildet ist, wobei in einem Übergangsbereich (39) des Auslaufrohrs (4) ein Segment des zweiten Abschnittes (B) mit einem Segment des ersten Abschnittes (A) mittels einer Steckverbindung miteinander verbunden ist, so dass eine Wulst aus niedrig schmelzendem Material des zweiten Abschnittes (B) um das hoch schmelzende Material des ersten Abschnittes (A) anliegt, die durch beim Erstarren entstehende Spannungen verklemmt ist.

9. Vorrichtung nach einem der vorhergehenden Ansprüche, bei der das Gefäß (2) von einer Abdeckung (18, 31) abgedeckt ist, die bevorzugt eine oxidationsbeständige Legierung umfasst und noch bevorzugter eine PtRh20-Legierung umfasst.

10. Vorrichtung nach Anspruch 9, bei der das Gefäß (2) und die Abdeckung (18, 31) druckdicht ausgelegt sind.

11. Vorrichtung nach Anspruch 10, bei der das Gefäß (2) einen Gaseinlass aufweist, um einem Innenvolumen des Gefäßes (2) ein inertes Gas zuzuführen, wobei eine Steuer- oder Regelungseinrichtung zum Steuern oder Regeln eines Drucks des inerten Gases in dem Innenvolumen vorgesehen ist.

12. Vorrichtung nach einem der vorhergehenden Ansprüche, bei der ein Öffnungsverhältnis h/L des Gefäßes (2) sehr viel größer als 1 ist, wobei h eine maximale Innenhöhe des Gefäßes (2) und L ein maximaler Abstand von Seitenwänden (6) des Gefäßes (2) ist.

13. Vorrichtung nach einem der vorhergehenden Ansprüche, bei der der Behälter (19, 20) einen Gaseinlass (22) zum Zuführen eines inerten Schutzgases in ein Innenvolumen des Behälters (19, 20) aufweist, der den Behälter (19, 20) mit einem Gasreservoir verbindet, das dem Behälter das inerte Schutzgas zuführt, um in dem Innenvolumen des Behälters neutrale bis leicht oxidierende Bedingungen aufrecht zu erhalten.

14. Vorrichtung nach Anspruch 13, bei der das Gasreservoir ein inertes Schutzgas mit einem Sauerstoffgehalt zwischen 5x10⁻³ % und 5 % und bevorzugter zwischen 0,5 % und 2 % aufbewahrt.

15. Vorrichtung nach einem der Ansprüche 12 bis 14, bei der der Behälter (19, 20) druckdicht ausgelegt ist, wobei zumindest ein Gasauslass zum Auslassen des inerten Schutzgases aus dem Innenvolumen des Behälters vorgesehen ist.

16. Vorrichtung nach einem der vorhergehenden Ansprüche, bei der das Gefäß (2) von einer Induktionsspule (3) umgeben ist, die bevorzugt wassergekühlt ist.

17. Vorrichtung nach Anspruch 16, bei der zwischen einer Seitenwand (6) des Gefäßes (2) und der Induktionsspule (3) ein hitzebeständiger Zylinder (23) angeordnet ist.

18. Vorrichtung nach Anspruch 17, bei der zwischen der Seitenwand (6) des Gefäßes (2) und dem Zylinder (23) eine Schüttung von hitzebeständigen Kügelchen vorgesehen ist.

19. Vorrichtung nach Anspruch 18, bei der die Kügelchen einen Durchmesser von mindestens 2,0 mm, bevorzugter von mindestens 2,5 mm und noch bevorzugter von mindestens 3,0 mm aufweisen, wobei die Kügelchen bevorzugt aus Magnesiumoxid (MgO) oder ZrO₂ gebildet sind.

20. Verfahren zur Herstellung von hoch schmelzenden Gläsern oder Glaskeramiken, die zur Herstellung einen Prozess durchlaufen, während dem eine Temperatur von 1760° C überschritten wird, mit den folgenden Schritten:
Bereitstellen eines Gefäßes (2) zum Aufnehmen einer Glasschmelze, wobei das Gefäß (2) einen rohrförmigen Auslass (4) aufweist, der zumindest einen ersten Abschnitt (1) und einen diesem in Auslaufrichtung der Glasschmelze nachgeordneten zweiten Abschnitt (B) aufweist, der aus einer oxidationsbeständigen Legierung gebildet und der Umgebungsatmosphäre ausgesetzt ist;
Anordnen des Gefäßes in einem Behälter (19, 20), dergestalt, dass der rohrförmige Auslass eine in dem Behälter ausgebildete Öffnung in die Umgebungsatmosphäre durchragt;
Einbringen eines Rohmaterials mit einer vorgegebenen Zusammensetzung in das Gefäß; und
Schmelzen des Rohmaterials zu einer Glasschmelze und Läutern der Glasschmelze; wobei
das Gefäß (2) und der erste Abschnitt (10-13) des rohrförmigen Auslasses (4) aus Iridium mit einem Iridium-Anteil von mindestens 99% oder einem hoch-iridiumhaltigen Material, das eine Platingruppe-Metalllegierung mit einem Iridium-Anteil von mindestens 95 % ist, bereitgestellt wird und in dem Behälter (19, 20) eine Schutzgasatmosphäre derart bereitgestellt wird, dass das Gefäß (2) und der erste Abschnitt (10-13) des rohrförmigen Auslasses in dem Behälter (19, 20) unter der Schutzgasatmosphäre aufgenommen werden, die eine Oxidbildung des Iridiums oder des hoch-iridiumhaltigen Materials verhindert, und
wobei die Glasschmelze auf eine Temperatur oberhalb von 1760° C aufgeheizt wird.

21. Verfahren nach Anspruch 20, wobei der erste Abschnitt (A) und/oder der zweite Abschnitt (B) des rohrförmigen Auslasses (4) derart bereitgestellt wird, dass zumindest ein Segment des zweiten Abschnittes (B) aus einer oxidationsbeständigen Legierung gebildet ist und einer Umgebungsatmosphäre ausgesetzt wird.

22. Verfahren nach einem der Ansprüche 20 oder 21, bei dem das Iridium mit einem Iridium-Anteil von mindestens 99,5 % und noch bevorzugter von mindestens 99,8 % bereitgestellt wird oder bei dem das hoch-iridiumhaltige Material mit einem Iridium-Anteil von mindestens 96,5 % und noch bevorzugter von mindestens 98 % bereitgestellt wird.

23. Verfahren nach einem der Ansprüche 20 bis 22, wobei dem Behälter (19, 20) ein inertes Schutzgas zugeführt wird, um in einem Innenvolumen des Behälters neutrale bis leicht oxidierende Bedingungen aufrecht zu erhalten.

24. Verfahren nach Anspruch 23, bei dem das inerte Schutzgas mit einem Sauerstoffgehalt zwischen etwa 5x10⁻³ % und etwa 5 % und bevorzugter zwischen etwa 0,5 % und etwa 2 % zugeführt wird.

25. Verfahren nach einem der Ansprüche 20 bis 24, bei dem
- die Glasschmelze in dem Gefäß (2) in einem ersten Betriebszustand zum Läutern zunächst auf einer Temperatur weit oberhalb einer Verarbeitungstemperatur der Glasschmelze gehalten wird während der rohrförmige Auslass (4) auf einer Temperatur gehalten wird, bei der die Glasschmelze einen den Auslass (4) verstopfenden Pfropfen ausbildet, und bei dem
- die Temperatur der Glasschmelze in dem Gefäß (2) in einem zweiten Betriebszustand nach dem Läutern auf die Verarbeitungstemperatur abgesenkt wird, während der rohrförmige Auslass (4) auf die Verarbeitungstemperatur erwärmt wird, so dass sich der Pfropfen löst und die Glasschmelze aus dem rohrförmigen Auslass (4) austritt.

26. Verfahren nach Anspruch 25, bei dem die Temperatur während des ersten Betriebszustands zumindest 2000° C, bevorzugter zumindest 2100° C und noch bevorzugter zumindest 2200° C beträgt.

27. Verfahren nach einem der Ansprüche 20 bis 25, bei dem die Glaszusammensetzung Gewichts-% 80 bis 90 Gewichts-% SiO₂, 0 bis 10 Gewichts-% Al₂O₃, 0 Gewichts-% bis 15 Gewichts-% B₂O₃, weniger als 3 Gewichts-% R₂O umfasst, wobei der Anteil von Al₂O₃ und B₂O₃ zusammen 7 Gewichts-% bis 20 Gewichts-% beträgt und R für ein Alkali-Element aus einer Gruppe bestehend aus Li, Na, K, Rb und Cs steht.

28. Verfahren nach Anspruch 27, bei dem die Glaszusammensetzung zusätzlich hoch schmelzende Oxide bis 20 Gewichts-% MgO und/oder bis 10 Gewichts-%, bevorzugter bis 5 Gewichts-% umfassen, beispielsweise TiO₂, ZrO₂, Nb₂O₅, Ta₂O₅, WO₃ oder MoO₃ oder Mischungen daraus.

29. Verfahren nach Anspruch 25, bei dem die Temperatur während des ersten Betriebszustandes zumindest 1800°C, bevorzugter 1850°C, beträgt und bei dem die Glaszusammensetzung 40 Gewichts-% bis 60 Gewichts-% SiO₂, 25 Gewichts-% bis 45Gewichts-% Al₂O₃ und 10 Gewichts-% bis 20 Gewichts-% MgO enthält.

30. Verfahren nach einem der Ansprüche 20 bis 28, bei dem die Glasschmelze bei ihrem Austritt von dem rohrförmigen Auslass (4) oder einer an dem rohrförmigen Auslass (4) vorgesehenen Heißformgebungseinrichtung (15) zu einem Formkörper geformt wird.

31. Verfahren nach einem der Ansprüche 20 bis 30, bei dem die Glasschmelze in dem Gefäß (2) während des ersten Betriebszustands mit einer Rührvorrichtung, die aus Iridium oder einem hoch-iridiumhaltigen Material gebildet ist, gerührt wird, wobei die Rührvorrichtung bevorzugt ein Gas zum Reduzieren und Läutern der Glasschmelze in die Glasschmelze einbläst.

32. Hochschmelzendes Glas oder hochschmelzende Glaskeramik, das bzw. die zur Herstellung einen Prozess durchläuft, während dem eine Temperatur von 1760° C überschritten wird, hergestellt nach einem Verfahren nach einem der Ansprüche 20 bis 31, umfassend:
80 Gewichts-% bis 90 Gewichts-% SiO₂,
0 Gewichts-% bis 10 Gewichts-% Al₂O₃,
0 Gewichts-% bis 15 Gewichts-% B₂O₃, und
weniger als 3 Gewichts-% R₂O, wobei
der Anteil von Al₂O₃ und B₂O₃ zusammen 7 Gewichts-% bis 20 Gewichts-% beträgt, **dadurch gekennzeichnet, dass** eine Transmission im sichtbaren Wellenlängenbereich zwischen 400 nm und 800 nm, bezogen auf eine Substratdicke von 20 mm, zumindest 65 %, bevorzugter zumindest 75 % und noch bevorzugter zumindest 80 % beträgt.

33. Glas oder Glaskeramik nach Anspruch 32, wobei die Transmission im Bereich einer Wasser-Absorptionsbande bei 1350 nm zumindest 75 % beträgt und/oder die Transmission im Bereich einer Wasser-Absorptionsbande bei 2200 nm zumindest 50 %, bevorzugter zumindest 55 % beträgt.

34. Verwendung des Glases nach Anspruch 32 oder 33 als Übergangsglas zur Verbindung zweier Glassorten mit unterschiedlichen thermischen Ausdehnungskoeffizienten.

## Claims

1. A device for the production of high-melting glass materials or high-melting glass ceramic materials which are processed by means of a process, where a temperature of 1760°C is exceeded, comprising a vessel (2) for accommodating molten glass and a container (19, 20) which accommodates the vessel (2), said vessel (2) having a tubular outlet (4), which protrudes to the ambient atmosphere via an opening formed in said container, wherein a heating device (3) for heating the molten glass is provided **characterised in that** the tubular outlet (4) comprises at least a first section (A) and a second section downstram from said first section (A), if viewed in the drawing direction of the molten glass, which is formed by an oxidation-resistant alloy and is exposed to the ambient atmosphere, wherein the vessel (2) and the first section (A) of the tubular outlet (4) are formed of iridium with an iridium content of at least 99% or of a material with a high iridium content, which is platinum group metal alloy with an iridium content of at least 95%, wherein the container (19, 20) is connected to a gas reservoir that supplies a protective gas to said container so that the vessel (2) and the first section (10-13) of the tubular outlet are received under a protective gas atmosphere in order to prevent oxide formation of the iridium or the material with a high iridium content, wherein the heating device (3) is configured for heating the molten glass to a temperature above 1760°C.

2. The device according to claim 1, wherein the first (A) and/or the second (B) sections are divided into a plurality of segments (10-14), wherein at least one segment (14, 15) of the second section (B) comprises an oxidation-resistant alloy and is exposed to the ambient atmosphere.

3. The device according to claim 1 or claim 2 whereby the tubular outlet (4) is configured as a hot forming device (15) for shaping the molten glass into a formed part or comprises such a hot forming device.

4. The device according to any one of the preceding claims, wherein the iridium comprises an iridium content of at 99.5% and even more preferably at least 99.8% or wherein the material with a high iridium content comprises a platinum group metal alloy with an iridium content of at least 96.5% and even more preferably at least 98%.

5. The device according to any of claims 2 to 4, wherein the oxidation-resistant alloy is a platinum group metal alloy comprising 30% by weight to 99 % by weight platinum and into which is mixed an element from a group comprising iridium (Ir), osmium (Os), palladium (Pd), rhodium (Rh) and ruthenium (Ru), wherein the oxidation-resistant alloy is preferably a PtRh30 alloy and even more preferably a PtRh20 alloy.

6. The device according to any of claims 2 to 5, wherein the ratio of a length of the first section (A) to a length of the second section (B) is approximately 2.0 and a wall thickness of the first section is approximately 70% of the wall thickness of the second section, wherein a heating current from a common heating current source may be supplied to the segments (10-14) of the first (A) and second (B) sections.

7. The device according to any of claims 2 to 5, wherein a heating current from separate heating current sources may be supplied to the segments (10-14) of the first (A) and second (B) sections.

8. The device according to any of claims 2 to 7, wherein the tubular outlet is configured as an outlet tube (4), wherein in a transitional range (39) of the outlet tube (4) a segment of the second section (B) is connected to a segment of the first section (A) by means of a plug connection so that a bead comprising a low-melting material in the second section (B) lies around the high-melting material in the first section (A) which becomes jammed on the stresses that occur on solidification.

9. The device according to any of the preceding claims, wherein the vessel (2) is covered by a cover (18, 31) that preferably comprises an oxidation-resistant alloy and more preferably comprises a PtRh20 alloy.

10. The device according to claim 9, wherein the vessel (2) and the cover (18, 31) has a pressure-tight design.

11. The device according to claim 10, wherein the vessel (2) comprises a gas inlet in order to supply an inert gas into an interior volume of the vessel (2), wherein a control or regulating device is provided to control or regulate a pressure of the inert gas in the interior.

12. The device according to any of the preceding claims, wherein an orifice ratio h/L of the vessel (2) is very much greater than 1, wherein h is a maximum internal height of the vessel (2) and L is a maximum distance from side walls (6) of the vessel (2).

13. The device according to any of the preceding claims, wherein the container (19, 20) comprises a gas inlet (22) for supplying an inert protective gas into the interior of the container (19, 20) connecting the container (19, 20) with a gas reservoir that supplies the inert protective gas to the container in order to maintain neutral to slightly oxidising conditions in the interior of the container.

14. The device according to claim 13, wherein the gas reservoir contains an inert protective gas with an oxygen content of between 5x10⁻³% and 5% and more preferably between 0.5% and 2%.

15. The device according to any of claims 12 to 14, wherein the container (19, 20) has a pressure-light design, wherein at least one gas outlet is provided to discharge the inert protective gas from the interior of the container.

16. The device according to any of the preceding claims, wherein the vessel (2) is surrounded by an induction coil (3) that is preferably water-cooled.

17. The device according to claim 16, wherein a heat-resistant cylinder (23) is arranged between a side wall (6) of the vessel (2) and the induction coil (3).

18. The device according to claim 17, wherein a filling of heat-resistant pellets is provided between the side wall (6) of the vessel (2) and the cylinder (23).

19. The device according to claim 18, wherein the pellets have diameter of at least 2.0 mm, more preferably at least 2.5 mm and even more preferably at least 3.0 mm, wherein the pellets preferably comprise magnesium oxide (MgO) or ZrO₂.

20. A method for the production of high-melting glass materials or glass ceramic materials, which are processed by means of a process, where a temperature of 1760°C is exceeded, comprising the steps of:
providing a vessel (2) to accommodate molten glass, said vessel (2) comprising a tubular outlet (4), which comprises at least a first section (A) and a second section downstram from said first section (A), if viewed in the drawing direction of the molten glass, which is formed by an oxidation-resistant alloy and is exposed to the ambient atmosphere;
disposing said vessel in a container (19, 20) such that the tubular outlet protrudes to the ambient atmosphere via an opening formed in said container;
introducing a raw material with a prespecified composition into the vessel; and
melting the raw material to produce molten glass and fining the molten glass, wherein
the vessel (2) and the first section (A) of the tubular outlet (4) are formed of iridium with an iridium content of at least 99% or of a material with a high iridium content, which is platinum group metal alloy with an iridium content of at least 95%, and wherein a protective gas atmoshphere is provided in said container (19, 20) such that the vessel (2) and the first section (10-13) of the tubular outlet are received under a protective gas atmosphere in order to prevent oxide formation of the iridium or the material with a high iridium content,
wherein the molten glass is heated to a temperature above 1760°C.

21. The method according to claim 20, wherein the first section (A) and/or a second section (B) of the tubular outlet (4) are provided in such a way that at least one segment of the second section (B) comprises an oxidation-resistant alloy and is exposed to an ambient atmosphere.

22. The method according to claim 20 or claim 21, wherein the iridium comprises an iridium content of at least 99.5% and even more preferably at least 99.8% or wherein the material with a high iridium content comprises a platinum group metal alloy with an iridium content of at least 96.5% and even more preferably at least 98%.

23. the method according to any of claims 20 to 22, wherein an inert protective gas is supplied to the container (19, 20) in order to maintain neutral to slightly oxidising conditions in the interior of the container.

24. The method according to claim 23, wherein the inert protective gas supplied has an oxygen content of between 5x10⁻³% and approximately 5% and more preferably between approximately 0.5% and approximately 2%.

25. The method according to any of claims 20 to 24, wherein
- the molten glass is at first held in the vessel (2) in a first operating mode for fining at a temperature way above the processing temperature for the molten glass while the tubular outlet (4) is held at a temperature at which the molten glass forms a stopper that plugs the outlet (4), and wherein
- the temperature of the molten glass in the vessel (2) is reduced in a second operating mode after the fining to the processing temperature while the tubular outlet (4) is heated to the processing temperature so that the stopper dissolves and the molten glass leaves the tubular outlet (4).

26. the method according to claim 25, wherein the temperature during the first operating mode is at least 2000°C, more preferably at least 2100°C and even more preferably at least 2200°C.

27. The method according to any of claims 20 to 25, wherein the glass composition comprises 80% to 90% by weight SiO₂, 0% to 10% by weight Al₂O₃, 0% to 15% by weight B₂O₃, less than 3% by weight R₂O whereby the content of Al₂O₃ and B₂O₃ together is 7% to 20% by weight and R stands for an alkali element from a group comprising Li, Na, K, Rb and Cs.

28. The method according to claim 27, wherein the glass composition further comprises high-melting oxides of up to 20% by weight MgO and/or up to 10% by weight, more preferably up to 5% by weight of TiO₂, ZrO₂, Nb₂O₅, Ta₂O₅, WO₃ or MoO₃ or mixtures thereof.

29. The method according to claim 25, wherein the temperature during the first operating mode is at least 1800°C, more preferably 1850°C and wherein the glass composition comprises 40% to 60% by weight SiO₂, 25% to 45% by weight Al₂O₃ and 10% to 20% by weight MgO.

30. The method according to any of claims 20 to 28, wherein the molten glass is shaped into a formed part on its emergence from the tubular outlet (4) or a heat forming device (15) provided on the tubular outlet (4).

31. The method according to any of claims 20 to 30, wherein the molten glass in the vessel (2) is stirred during the first operating mode with a stirring device comprising iridium or a material with a high iridium content, whereby the stirring device blows a gas into the molten glass to reduce and refine the molten glass.

32. A high-melting glass material or high-melting glass ceramic material processed by means of a process, where a temperature of 1760°C is exceeded, produced according to a method according to any of claims 20 to 31, comprising:
80% to 90% by weight SiO₂
0% to 10% by weight Al₂O₃
0% to 15% by weight B₂O₃ and
less than 3% by weight R₂O, whereby
the content of Al₂O₃ and B₂O₃ together is 7% to 20% by weight, **characterised in that** a transmission in the visible wavelength range between 400 nm and 800 nm based on a substrate thickness of 20 mm is at least 65%, more preferably at least 75% and even more preferably at least 80%.

33. The glass material or glass ceramic material according to claim 32, wherein the transmission in the range of a water absorption band at 1350 nm is at least 75% and/or the transmission the range of water absorption band at 2200 nm is at least 50%, more preferably at least 55%.

34. A use of the glass according to claim 32 or claim 33 as a transitional glass for connecting two types of glass having different coefficients of thermal expansion.

## Revendications

1. Un dispositif de fabrication de verres ou vitrocéramiques à point de fusion élevée, traités au moyen d'un procédé, à une température excédant 1760 °C , comprenant un récipient (2) pour recevoir de la fonte de verre et un container (19, 20) qui reçoit le récipient (2), ledit récipient (2) ayant une évacuation circulaire (4), laquelle débouche dans l'atmosphère ambiante via une ouverture formée dans ledit container, dans lequel est mis en oeuvre un dispositif de chauffage (3) pour le chauffage de la fonte de verre, **caractérisé en ce que** l'évacuation circulaire (4) comporte au moins une première section (1) et une seconde section en aval de ladite première section (A), dans le sens du tirage de la fonte de verre, qui est formé au moyen d'un alliage résistant à l'oxydation et qui est exposé à l'atmosphère ambiante, dans lequel le récipient (2) et la première section (A) de l'évacuation circulaire (4) sont formés d'iridium ayant une teneur d'iridium au moins égale à 99% ou à partir d'un matériau à haute teneur en iridium, à savoir un alliage métallique du groupe du platine ayant une teneur en iridium au moins égale à 95%, dans lequel le récipient (19, 20) est connecté à un réservoir de gaz fournissant un gaz protecteur audit récipient de telle manière que le récipient (2) et la première section (10-13) de l'évacuation circulaire sont sous une atmosphère gazeuse protectrice de manière à éviter une formation d'oxyde de l'iridium ou du matériau à haute teneur d'iridium, dans lequel le dispositif de chauffage (3) est configuré pour chauffer la fonte de verre à une température supérieure à 1760 °C.

2. Le dispositif selon la revendication 1, dans lequel la première (A) et/ou la seconde (B) sections sont divisées en une pluralité de segments (10-14), dans lequel au moins un segment (14, 15) de la seconde section (B) comporte un alliage résistant à l'oxydation et qui est exposé à l'atmosphère ambiante.

3. Le dispositif selon la revendication 1 ou 2 dans lequel l'évacuation circulaire (4) est configurée sous la forme d'une dispositif de formation à chaud (15) pour la mise en forme de la fonte de verre en une partie formée ou qui comporte un tel dispositif de formation à chaud.

4. Le dispositif selon l'une quelconque des revendications précédentes, dans lequel l'iridium comporte une teneur en iridium de 99.5% et même de préférence au moins égale à 99.8% ou dans lequel le matériau à haute teneur en iridium comporte un alliage métallique du groupe de platine ayant une teneur en iridium au moins égale à 96.5 % et même de préférence au moins égale à 98%.

5. Le dispositif selon l'une quelconque des revendications 2 à 4, dans lequel l'alliage résistant à l'oxydation est un alliage métallique du groupe du platine comportant de 30% à 99% en poids de platine et dans lequel est mélangé un élément du groupe comprenant de iridium (Ir), de l'osmium (Os), du palladium (Pd), du Rhodium (Rh) et du ruthénium (RU), dans lequel l'alliage résistant à l'oxydation est de préférence un alliage de PtRh30 et même de préférence un alliage PtRh20.

6. Le dispositif selon l'une quelconque des revendications 2 à 5, dans lequel le rapport d'une longueur de la première section (A) à une longueur de la seconde section (B) est approximativement égal à 2.0 et une épaisseur de paroi de la première section est approximativement égale à 70% l'épaisseur de paroi de la seconde section, dans lequel un courant de chauffage généré par une source de courant de chauffage commune peut être fournie aux segments (10-14) des première (A) et seconde (B) sections.

7. Le dispositif selon l'une quelconque des revendications 2 à 5, dans lequel un courant de chauffage généré par des sources de courant de chauffage séparées peuvent être fournis aux segments (10-14) des première (A) et seconde (B) sections.

8. Le dispositif selon l'une quelconque des revendications 2 à 7, dans lequel l'évacuation circulaire est configurée comme un tube d'évacuation (4), dans lequel un segment de la seconde section (B) est connecté à un segment de la première section (A) à l'intérieur d'une transition (39) du tube d'évacuation (4) au moyen d'une connexion par prise de telle manière qu'un joint de soudure comprenant un matériau à faible point de fusion dans la seconde section (B) entoure le matériau à haut point de fusion dans la première section (A), s'engageant lors du stress intervenant lors de la solidification.

9. Le dispositif selon l'une quelconque des revendications précédentes, dans lequel le récipient (2) est recouvert d'un couvercle (18, 31) qui comporte de préférence un alliage résistant à l'oxydation et de manière préférentielle un alliage PtRh20.

10. Le dispositif selon la revendication 9, dans lequel le récipient (2) et le couvercle (18, 31) présente une disposition étanche à la pression.

11. Le dispositif selon la revendication 10, dans lequel le récipient (2) comporte une arrivée de gaz pour fournir un gaz inerte à l'intérieure d'un volume interne du récipient (2), dans lequel un dispositif de commande ou de régulation est mis en oeuvre pour commander ou réguler la pression du gaz inerte à l'intérieur.

12. Le dispositif selon l'une quelconque des revendications précédentes, dans lequel un rapport d'orifice h/L du récipient (2) est très supérieur à 1, dans lequel h est la hauteur interne maximale du récipient (2) et L est une distance maximale entre les parois latérales (6) du récipient (2).

13. Le dispositif selon l'une quelconque des revendications précédentes, dans lequel le container (19, 20) comporte une arrivée de gaz (22) pour l'alimentation en gaz de protection inerte au sein du container (19, 20) connectant le container (19, 20) à un réservoir de gaz fournissant le gaz de protection inerte au container afin de maintenir des conditions neutres ou légèrement oxydantes à l'intérieur du container.

14. Le dispositif selon la revendication 13, dans lequel le réservoir de gaz comporte un gaz de protection inerte ayant une teneur en oxygène comprise entre 5x 10⁻³% et 5% et de préférence entre 05% et 2%.

15. Le dispositif selon l'une quelconque des revendications 12 à 14, dans lequel le container (19, 20) présente une disposition étanche à la pression, dans lequel est disposée au moins une arrivée de gaz pour libérer le gaz de protection inerte à l'intérieur du container.

16. Le dispositif selon l'une quelconque des revendications précédentes, dans lequel le récipient (2) est entouré par une bobine d'induction (3), qui est de préférence refroidie par eau.

17. Le dispositif selon la revendication 16, dans lequel un cylindre résistant à la chaleur (23) est disposée entre une paroi latérale (6) du récipient (2) et la bobine d'induction.

18. Le dispositif selon la revendication 17, dans lequel un remplissage de boulettes résistantes à la chaleur sont disposées entre la paroi latérale (6) du récipient (2) et le cylindre (23).

19. Le dispositif de la revendication 18, dans lequel les boulettes présente un diamètre d'au moins 2.0 mm, et de préférence au moins 2.5 mm et même plus préférentiellement au moins égale à 3.0 mm, dans lequel les boulettes comportent de préférence un oxyde de magnésium (Mg0) ou Zr02.

20. Une méthode de fabrication de verres ou vitrocéramique à point de fusion élevée, traités au moyen d'un procédé, à une température excédant 1760 °C, comprenant les étapes:
la mise à disposition d'un récipient (2) pour recevoir de la fonte de verre, ledit récipient (2) comportant une évacuation circulaire (4), comprenant au moins une première section (A) et une seconde section en aval de ladite première section (A), dans le sens de tirage de la fonte de verre, qui est formée à partir d'un alliage résistant à l'oxydation et qui est exposé à l'atmosphère ambiante;
la disposition dudit récipient dans un container (19, 20) de telle manière que l'évacuation circulaire débouche dans l'atmosphère ambiante via une ouverture formée dans ledit container;
l'introduction d'un matériau brut ayant une composition prédéfinie dans le récipient; et
la fonte dudit matériau brut de manière à obtenir de la fonte de verre et l'affinage de la fonte de verre, dans lequel
le récipient (2) et la première section (A) de l'évacuation circulaire (4) sont formés d'iridium ayant une teneur en iridium au moins égale à 99% ou à partir d'un matériau à haute teneur en iridium, à savoir un alliage métallique du groupe du platine ayant une teneur en iridium au moins égale à 95%, dans lequel une atmosphère de gaz protecteur est disposée à l'intérieur dudit container (19, 20) de telle manière que le récipient (2) et la première section (10-13) de l'évacuation circulaire sont disposées sous une atmosphère gazeuse protectrice de manière à éviter une formation d'oxyde de l'iridium ou du matériau à haute teneur en iridium, dans lequel la fonte de verre est chauffée à une température supérieure à 1760 °C.

21. La méthode selon la revendication 20, dans laquelle la première (A) et/ou une seconde (B) sections sont disposées de telle manière qu'au moins un segment de la seconde section (B) comporte un alliage résistant à l'oxydation et qui est exposé à l'atmosphère ambiante.

22. La méthode selon la revendication 20 ou 21, dans laquelle l'iridium comporte une teneur en iridium de 99.5% et même de préférence au moins égale à 99.8% ou dans lequel le matériau à haute teneur en iridium comporte un alliage métallique du groupe de platine ayant une teneur en iridium au moins égale à 96.5 % et même de préférence au moins égale à 98%.

23. Le dispositif selon l'une quelconque des revendications 20 à 22, dans laquelle un gaz protecteur inerte est disposée dans le container (19, 20) de manière à maintenir des conditions neutres voire légèrement oxydante à l'intérieur du container.

24. La méthode selon la revendication 23, dans laquelle le gaz protecteur inerte présente une teneur en oxygène comprise entre 5x 10⁻³% et 5% et de préférence entre 05% et 2%.

25. La méthode selon l'une quelconque des revendications 20 à 24, dans laquelle :
- la fonte de verre est d'abord tenue à l'intérieur du récipient (2) suivant un premier mode opératoire pour l'affinage à une température bien inférieure de la température e traitement de la fonte de verre alors que l'évacuation circulaire (4) est maintenue à une température à laquelle la fonte de verre forme un arrêt formant l'évacuation (4), et dans laquelle
- la température de la fonte de verre dans le récipient (2) est réduite lors d'un second mode opératoire à la suite de l'affinage vers la température de traitement alors que l'évacuation circulaire (4) est chauffée à la température de traitement de telle manière que l'arrêt se dissout et que la fonte de verre s'écoule par l'évacuation circulaire (4).

26. La méthode selon la revendication 25, dans laquelle la température est au moins égale à 2000°C durant le premier mode opératoire, et de préférence au moins égal à 2100°C, et même plus préférentiellement de 2200 °C.

27. La méthode selon l'une quelconque des revendications 20 à 25, dans laquelle la composition de verre comporte 80% à 90% en poids de SiO₂, 0% à 10% en poids de Al₂O₃, 0% à 15% en poids de B₂O₃, moins de 3% en poids de R₂O, de manière que la teneur de Al₂O₃ et B₂O₃ ensemble est de 7% à 20% en poids et R représente un élément alcalin du groupe comportant Li, Na, K, Rb et Cs.

28. La méthode selon la revendication 27, dans laquelle la composition de verre comporte en outre des oxydes à point de fusion élevé jusqu'à 20% en poids MgO et/ou, en poids, de préférence jusqu'à 5% de TiO₂, ZrO₂, Nb205, Ta₂O₅, WO₃ ou des mélanges de ces derniers.

29. La méthode selon la revendication 25, dans laquelle la température durant le premier mode opératoire est au moins égale à 1800°C, de préférence 1850°C et dans laquelle la composition de verre comporte 40% à 60% en poids de SiO₂, 25% à 45% en poids de Al₂O₃ et 10% à 20% en poids de MgO.

30. La méthode selon l'une quelconque des revendications 20 à 28, dans laquelle la fonte de verre est mise en forme au sein d'une partie formée à l'embouchure de l'évacuation circulaire (4) ou d'un dispositif de formation à chaud (15) disposé sur l'évacuation circulaire (4).

31. La méthode selon l'une quelconque des revendications 20 à 30, dans laquelle la fonte de verre est malaxée dans le récipient (2) durant le premier mode opératoire au moyen d'un malaxeur comprenant de l'iridium ou un matériau à haute teneur en iridium, par lequel le malaxeur insuffle un gaz au sein de la fonte de verre pour réduire et affiner la fonte de verre.

32. Un verre ou une vitrocéramique à point de fusion élevée, traités au moyen d'un procédé ave une température excédant 1760 °C , fabriqués suivant une méthode définie selon l'une quelconque des revendications 20 à 31, comprenant:
80% à 90% en poids de SiO₂,
0% à 10% en poids de Al₂O₃,
0% à 15% en poids de B₂O₃,
moins de 3% en poids de R₂O,
dans lequel la teneur de Al₂O₃ et B₂O₃ ensemble est de 7% à 20% en poids, **caractérisé en ce qu'**une transmission dans la gamme de longueur d'onde visible entre 400nm et 80 nm basée sur une épaisseur de substrat de 20mm est au moins égale à 65% et de préférence au moins égale à 75%, et plus préfentiellement encore au moins égal à 80%.

33. Le verre ou la vitrocéramique selon la revendication 32, dans lequel la transmission dans la bande d'absorption de l'eau à 1350 nm est au moins égale à 75% et/ou la transmission dans la bande d'absorption de l'eau à 2200 nm est au moins égale à 50% et de préférence au moins égale à 55%.

34. Une utilisation d'un verre selon la revendication 32 ou 33 comme verre de transition pour la connexion de deux types de verres ayant des coefficients d'expansion thermique différents.
